# EUROPEAN PATENT SPECIFICATION

(11) **EP 1 330 882 B1**
(45) Date of publication and mention of the grant of the patent: **23.12.2015**
(21) Application number: 01998124.0
(22) Date of filing: 23.10.2001
(51) Int. Cl.: G08C 23/04

(54) **SYSTEM AND METHOD FOR WIRELESS DATA EXCHANGE BETWEEN AN APPLIANCE AND A HANDHELD DEVICE**
SYSTEM UND VERFAHREN ZUM DRAHTLOSEN DATENAUSTAUSCH ZWISCHEN EINEM GERÄT UND EINER IN DER HAND GEHALTENEN EINRICHTUNG
SYSTEME ET PROCEDE D'ECHANGE DE DONNEES SANS FIL ENTRE UN APPAREIL ET UN DISPOSITIF PORTATIF

(30) Priority: 24.10.2000 US 242898 P; 08.02.2001 US 267441 P
(43) Date of publication of application: 30.07.2003
(73) Proprietor: GEBERIT TECHNIK AG, 8645 Jona (CH)
(72) Inventor: WATSON, Thomas, J., Madison, AL 35758-1772 (US); PATTERSON, Wade, C., Huntsville, AL 35806-2203 (US)
(74) Representative: REHBERG HÜPPE + PARTNER
(86) International application number: PCT/US2001/050725
(87) International publication number: WO 2002/061955

(56) References cited:
- US-A- 4 420 811
- US-A- 4 420 811
- US-A- 5 745 049
- US-A- 5 745 049
- US-A- 6 125 482
- US-A1- 2002 088 823

## Description

### BACKGROUND OF INVENTION

### 1. Field of the Invention

The present invention relates generally to the field wireless data communications, and more particularly, to data communication between a handheld device having an optical interface port that transmits and receives signals with an optical interface port of an electronically operated appliance.

### 2. Technical Background

Standard infrared (IR) devices communicate in accordance with the Infrared Data Association Serial Infrared Physical Layer Specification (hereinafter referred to as the Serial Infrared Specification) promulgated by the Infrared Data Association (IrDA). The IrDA is a standard body that publishes specifications containing the criteria by which IR device manufacturers must comply in order to claim IrDA compliance.

The physical layer specification governs point-to-point communication between electronic devices, such as computers and peripherals, using directed half-duplex, serial infrared communication links through free space. The physical elements, including the optical links and active input and output interfaces, are described in the physical layer specification. In order for a device to be IrDA compliant, the device must be designed to meet the specifications as indicated in the physical layer specification.

In particular, the IrDA Physical Layer Specification places constraints on the communication procedure when a device attempts to establish an optical link with a second device. The IrDA Physical Layer Specification sets forth requirements that govern the behavior of a device having a transmitter/detector pair when establishing an optical link. Compliance with the IrDA Physical Layer Specification requires that the device sample its detection range. An IrDA compliant device will not transmit a pulse to another device to request a link until it detects 500 msecs of "media quiet." "Media quiet" means that there is no IR activity detected during the 500 msec duration.

Once an optical link is established between two devices, IrDA compliance requires that a serial interaction pulse (SIP) be emitted every 500 msecs to quiet other potentially interfering systems. In other words, the 500 msec "media quiet" requirement will ensure that the potentially interfering device detects an SIP every 500 msecs thereby precluding the device from attempting to establish a connection.

The SIP is required by the Physical Layer Specification to quiet slower systems that might interfere with the optical link established between the transmitter and the receiver. An SIP is a 1.6 microsecond pulse followed by a 7.1 microsecond off time of the transmitter. The SIP simulates a start pulse that requires a potentially interfering system to listen for at least 500 milliseconds prior to establishing an optical link.

In accordance with the Physical Layer Specification, optical sensors are commonly employed with IR transmitters which, together with processing electronics, are used to detect an object in the range of the IR transmitter. An IR pulse is emitted, and if it strikes an object in its range, the pulse is reflected. An IR sensor is placed strategically in order to detect the reflected pulse.

The dichotomous emitter/sensor technology is employed in various applications including electronically activated fluid dispensing devices. Such dispensing systems, such as hand activated water faucets, generally include an infrared emitter that emits a timed pulse. When an object, such as a user's hands, is within the emitter's range, it reflects the pulsed IR beam, and the optical sensor detects the reflected light from the user's hands. In such a system, an IrDA compliant device emits a pulse every 250 milliseconds.

Various methods have been employed to electronically control water flow through a water control device such as a faucet or spigot. Among the accepted methods is the use of an optical sensor typically employed in combination with an infrared ("IR") source or IR emitter that together with processing electronics, are used to control a solenoid valve. Generally speaking, a pulsed IR beam is reflected from an object (such as a user's hands or other body parts, for example) and sensed by a photo detector to determine whether to activate or deactivate the solenoid valve. Pulsed IR sensing remains at the forefront of sensing techniques used with these types of devices, due in part to its reasonable performance and low cost.

Automatically activated fluid dispensing devices commonly known in the art do have a myriad of operating shortcomings. For example, devices such as IR controlled faucets require extensive manual servicing and maintenance. Inherently, in an environment such as an office building having numerous floors and numerous faucets in each of the restrooms on each of the floors, servicing and maintenance of the IR controlled devices is often a burdensome and time consuming task. Many simple tasks associated with the maintenance of the faucets, including battery replacement, IR range monitoring, and solenoid malfunction detection, are typically manually performed per faucet per restroom per floor in an office building. This type of monitoring of malfunctioning units dictates manual interaction with each unit for diagnostics, maintenance, calibration, and servicing.

In addition, a common denominator for many of the problems associated with automatically activated flow control devices, such as faucets, is the environment in which such devices are installed and operate. For instance, existing IR sensor designs generally suffer from an inability to adapt to changes in the background signal level associated with a gradual discoloration of the sink in which the faucet is mounted, a gradual degradation of the sensor lens due to the use of abrasive cleaning compounds, a gradual degradation of the IR emitter performance, among other things. Generally, existing sensors employ a fixed sensitivity threshold that is set either at the factory or by the installer (or both). When the IR sensor sensitivity is fixed, the sensors performance will inevitably degrade with environmental changes, and when the degradation causes faulty operation, a service call may be required. In some instances, the gradual degradation will go unnoticed resulting in poor performance.

In addition, calibration of today's automatically activated flow control devices is often labor intensive and inefficient with respect to devices presently on the market. The low cost IR sensing devices employed in automatically activated flow control devices vary with respect to power requirements, performance, and other criteria. As a result, readings taken by these IR sensing units (such as whether a user's hands are present beneath the aerator of a faucet) are generally non-uniform from device to device and, therefore, often result in improper activation and deactivation of some devices. Similarly, as battery power for these devices decreases over time, so does the power output of the IR sensing devices. As a result, manual calibration of conventional automatically activated flow control devices is generally required during initial installation, and thereafter on a frequent basis following extended periods of use.

Unfortunately, vandalism and water damage also adversely affect the use and proper operation of automatically activated flow control devices presently available in the art. Water often travels along the wiring harness extending from the flow control device to the device's electronics causing corrosion to the parts. In addition, vandals may attempt to break into the electronics box associated with the device or pull the wires from either the electronics box or the faucet.

What is needed therefore, but presently unavailable in the art is a system and method of wireless two-way data exchange between an appliance such as, an electronically activated flow control device, and a handheld device that overcomes many of the shortcomings associated with electronically activated appliances presently available in the art. Such a system and method should be easily maintained by maintenance personnel, substantially impervious to vandalism, self-calibrating, and remotely controlled. In addition, the system of the present invention should be capable of being remotely managed and controlled by any number of portable communication devices presently available in the art. The system should consume low power, be easy to install, and low cost. Moreover, the system should be capable of receiving instruction from a remote IRDA emitting device despite the appliances rapid rate of emitted IR sensing pulses. Large numbers of appliances within the system should also be capable of being used in a distributed network environment, and should be adapted to be managed and controlled from as few as one centralized control point. It is to the provision of such a system and method that the present invention is primarily directed.

US-patent 5,745,049 discloses a wireless equipment diagnosis system for performing inspection and maintenance, which comprises sensors which measure information on each equipment being diagnosed, a transponder which transmits measured data from the sensor after modulating the measures data, a portable interrogator which acquires the measured data by receiving transmitted signals from the transponder, and a host computer which diagnoses each equipment by implementing predetermined signal processing using information stored in advance and data transferred from the acquired data.

### SUMMARY OF THE INVENTION

The present invention provides a wireless data exchange system comprising an electronically operated fluid dispensing device according to independent claim 1, and a method of exchanging data wirelessly between a fluid dispensing device and a communication device according to independent claim 5. Preferred embodiments of the invention are defined in the dependent claims.

One aspect of the present invention relates to a wireless data exchange system. The wireless data exchange system of the present invention includes an electronically operated appliance having a transmitter, a receiver, and a control module configured to communicate with the transmitter and the receiver. The control module is configured to provide a primary mode of operation and a secondary mode of operation and includes control logic configured to selectively change the mode of operation of the electronically operated appliance. The system further includes a communication device adapted to be held in the hand of a user. The communication device is configured to cooperate with the transmitter and receiver to impart instructions wirelessly to the control logic to change the mode of operation of the electronically operated appliance upon receipt of a command from the user.

In another aspect the present invention relates to a method of exchanging data wirelessly between an apparatus and a communication device. The method includes the steps of sending a wireless signal from a handheld communication device to an electronically operated appliance operating in a primary mode of operation, and changing the mode of operation of the electronically operated appliance from a primary mode of operation to a secondary mode of operation in response to the sending step. The method further includes the step of establishing a two-way wireless communication link for the exchange of data between the handheld device and the electronically operated appliance while the electronically operated appliance is in the secondary mode of operation.

The remotely managed system and method of the present invention results in a number of advantages over conventional electronically activated appliances commonly known in the art. For example, the remotely managed system and method of the present invention provides for the efficient servicing and maintenance of multiple remotely managed electronic dispensing apparatuses positioned in a single room, such as a public restroom. In accordance with the invention, maintenance personnel may simply enter the room with a portable communication device and determine which if any of the remotely managed electronic dispensing apparatuses are defective, or otherwise require servicing.

An additional advantage of the present invention is provided by the cooperation of the anti-vandalism bracket and strain relief sheath of the present invention. The anti-vandalism bracket and strain relief sheath protect the electronics and the associated cables or leads providing a communication path between the dispensing apparatus and the electronics. In the past, separation of the leads from the electronics often resulted from individuals intentionally or otherwise pulling on the leads or associated connectors. In accordance with the present invention, these leads are now covered with a protective sheath that cooperates with the anti-vandalism bracket to withstand the pulling forces that would otherwise separate the leads from the electronics. The strain relief sheath may also provide a drip loop for capturing water that could otherwise damage the electronics, cable or connectors.

A further advantage to the present invention relates to the system's ability to control and manage any number of dispensing apparatuses from a central controller or computer. The preferred hubs used in the distributed network environment enable a plurality of dispensing apparatuses to be connected to a network via the standard RS232 serial ports provided with traditional electronically activated dispensing apparatuses presently available in the art. Moreover, the filtering and calibrating technology incorporated in the system of the present invention significantly limits the number of false detections and false activations, and therefore reduces the number of instances of dispensing apparatus malfunctions, wear and tear on the dispensing apparatuses, and the waste of fluids dispensed by such dispensing apparatuses.

Additional features and advantages of the invention will be set forth in the detailed description which follows and in part will be readily apparent to those skilled in the art from that description or recognized by practicing the invention as described herein.

It is to be understood that both the foregoing general description and the following detailed description are merely exemplary of the invention, and are intended to provide an overview or framework for understanding the nature and character of the invention as it is claimed. The accompanying drawings are included to provide further understanding of the invention, illustrate various embodiments of the invention, and together with the description serve to explain the principles and operation of the invention.

### BRIEF DESCRIPTION OF THE DRAWINGS

**FIG.1** is a block diagram illustrating a data communication system in accordance with a first preferred embodiment of the present invention.
**FIG. 2** is a flowchart illustrating the event loop of the control logic **120** in **FIG. 1** of Remote management node of the present invention.
**FIG. 3** is a flowchart illustrating the communication function called by the event loop **114** from the communication function call **122** illustrated in **FIG. 2****.**
**FIG. 4** is a detailed flowchart of the send status command called by the communication module **132** from the send status **146** in **FIG. 3****.**
**FIG. 5A-5D** is a flowchart illustrating the general functionality of the overall firmware structure of the fluid dispensing device that forms a part of the first preferred embodiment of the system and method of the present invention.
**FIG. 6A-6C** is a flowchart illustrating the Interrupt Driven IR and Battery Thread of the firmware of the fluid dispensing device that forms a part of the first preferred embodiment of the system and method of the present invention.
**FIG. 7A-7G** is a flowchart illustrating the IR and Battery Detection Thread of the firmware of the fluid dispensing device that forms a part of the preferred embodiment of the system and method of the present invention.
**FIG. 8A-8D** is a flowchart illustrating the Motion Detection Thread of the firmware of the fluid dispensing device that forms a part of the first preferred embodiment of the system and method of the present invention.
**FIG. 9A-9C** is a flowchart illustrating the Motion Detection Thread of the firmware of the fluid dispensing device that forms a part of the first preferred embodiment of the system and method of the present invention.
**FIG. 10** is a block diagram illustrating the data unit descriptions of a Broadcast signal.
**FIG. 11** is a block diagram illustrating the data unit descriptions of an Attention signal.
**FIG. 12** is a block diagram illustrating the data unit descriptions of a Connected Mode request signal.
**FIG. 13** is a block diagram illustrating the data unit descriptions of a Status signal.
**FIG. 14** is a block diagram illustrating the data unit descriptions of a Set signal.
**FIG. 15** is a block diagram illustrating the data unit descriptions of a Program signal.
**FIG. 16** is a block diagram illustrating the data unit descriptions of an End signal.
**FIG. 17** is a graphical depiction of the graphical user interface of a handheld computer illustrating five (5) exemplary user options, including three options that incorporate an optical link with the fluid dispensing device of the present invention, "Get Faucet Data", "Adjust Faucet", and "Scan For Problems".
**FIG. 18** is a graphical depiction of the graphical user interface of a handheld computer illustrating the "Get Faucet Data" option form that allows a user to retrieve current fluid dispensing device parameters.
**FIG. 19** is a graphical depiction of the graphical user interface of a handheld computer illustrating the "Adjust Faucet" option form that allows a user to edit current fluid dispensing device parameters.
**FIG. 20** is a graphical depiction of the graphical user interface of a handheld computer illustrating the "Scan For Problems" option form that allows a user to retrieve Broadcast signals as diagrammed in **FIG. 10** from a set of fluid dispensing devices.
**FIG. 21A-B** is a flowchart illustrating the overall software flow of the firmware structure of the fluid dispensing device as shown in **FIG. 5A-5D****.**
**FIG. 22** is a flowchart illustrating the Broadcast functionality of the fluid dispensing device and the data unit that is depicted in **FIG. 10****.**
**FIG. 23** is a diagram of a conventional electronically operated dispensing device.
**FIG. 24** is a diagram illustrating a second preferred electronically operated dispensing device incorporating a portable communication device in accordance with the present invention.
**FIG. 25** is a schematic diagram of an exemplary remotely managed dispensing system incorporating the dispensing apparatus depicted in **FIG. 24****.**
**FIGs. 26a-26f** depict of exemplary control and information screens displayed by the portable communication device (PCD) depicted in **FIG. 25****.**
**FIG. 27** is a block diagram illustrating a the preferred elements of the control module depicted in **FIG. 24****.**
**FIG. 28** is a block diagram illustrating the preferred elements of the transmitting portion of the control module depicted in **FIG. 27****.**
**FIG. 29** is a diagram of timing relations for pulses transmitted by the dispensing apparatus of **FIG. 24****.**
**FIG. 30** is a block diagram illustrating the preferred elements of the receiving portion of the control module depicted in **FIG. 27****.**
**FIG. 31** is a diagram illustrating the location of emitter and receiver elements on the sensor module of the dispensing apparatus depicted in **FIG. 24****.**
**FIG. 32a-32c** illustrate various views of a front-to-back mounting of photo diodes in accordance with a preferred embodiment of the present invention,.

### DETAILED DESCRIPTION OF THE PREFERRED EMBODIMENTS

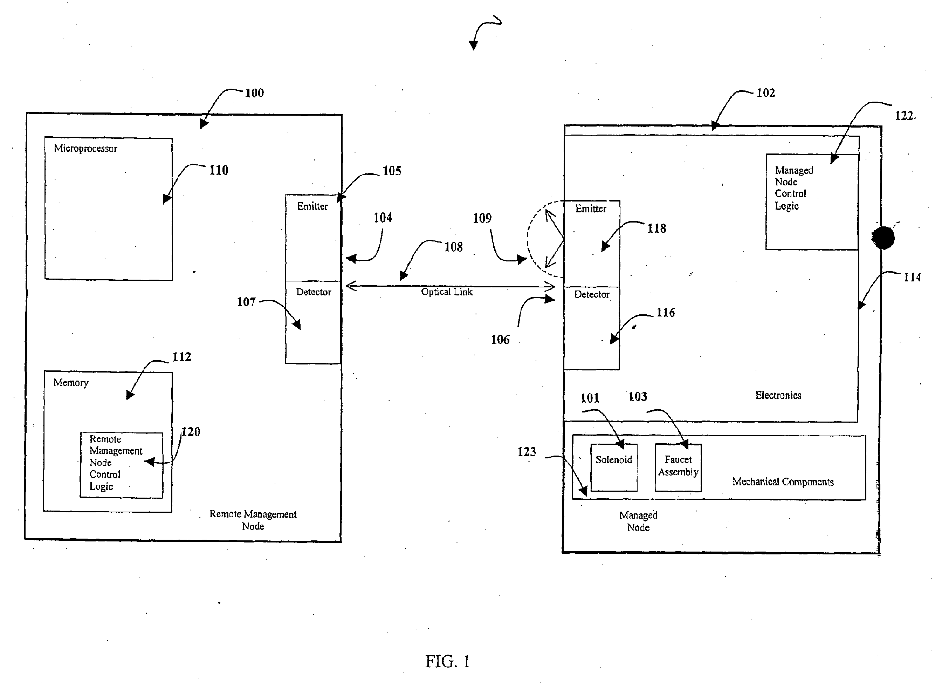

Reference is now made in detail to a present preferred embodiments of the present invention, examples of which are illustrated in the accompanying drawings. Wherever possible, the same reference numerals will be used throughout the drawing figures to refer to the same or like parts. An exemplary embodiment of the data communication system and method of the present invention is illustrated in the block diagram of **FIG. 1** and is designated generally throughout by reference numeral **98.**

In accordance with the invention, the hardware elements of one preferred embodiment of the data communication system of the present invention include Remote Management Node **100** and Managed Node **102**. Remote Management **Node .100** includes generally an optical interface port **104**, a processing element **110**, and a memory element **112**. Managed Node **102** includes generally an optical interface port **106**, an electronics module **114**, and a Mechanical Element **123**. The optical interface port **106** of Managed Node **102** includes an emitter **118** and a detector **116**. The emitter **118** has a pulse range **119** wherein an object within the arc showing pulse range **119** will reflect a pulse transmitted from emitter **118**. Communication between Remote Management Node **100** and Managed Node **102** is accomplished by an optical link **108** in free space between the optical interface port **104** and **106**.

The Memory Element **112** of Remote Management Node **100** houses the remote management control logic **120**. Processing element **110** manipulates the optical interface port **104**.

Managed Node **102** further includes Mechanical Elements **123**, known to those skilled in the art, necessary for controlling an electronically operated appliance such as, but not limited to, a fluid-dispensing device **102**. The electronics **114** include further a Managed Node Control Logic **122** that controls functionality of the optical port **106** and the manipulation of Mechanical Elements **123**.

The emitter **118** of Managed Node **102** periodically emits a pulse, such as every 250 milliseconds, for example. The pulse emission creates an optical signal in free space. In order for the optical interface port **104** of Remote Management Node **100** to establish an optical link with the optical interface port **106** of Managed Node **102** Remote Management Node Control Logic **120** resides in a memory component **112** of Remote Management Node **100**. The Remote Management Node Control Logic **120** can be implemented in software, hardware, or a combination thereof.

The Remote Management Node Control Logic **120** causes the emitter **105** to emit an Attention signal from the optical interface port **104**. The Remote Management Node Control Logic **120** is managed and manipulated by the microprocessor **110**. The attention signal that is emitted from the optical interface port **104** is transmitted regardless of its detection of a "media quiet" environment. In other words, the Attention Signal is emitted despite the 250-millisecond infrared pulse of the emitter **118** of Managed Node **102**.

As previously described, the electronics **114** in cooperation with the Managed Node Control Logic **122** cause the periodic emission of an infrared pulse from the emitter **118**. In this regard, the emitter **118** causes such an emission every 250 milliseconds. Prior to emission of the infrared pulse, the detector **116** attempts to detect an attention signal that is emitted from the optical interface port **104** of Remote Management Node **100**. If an attention signal is not detected, the emitter **118** is allowed to operate normally, emitting an infrared pulse every 250 milliseconds. If, on the other hand, an attention signal is detected, normal operation of the emitter is discontinued and an optical link **108** is established between the optical interface port **104** and the optical interface port **106**. If the attention signal is not detected, then normal operation of the emitter **118** continues.

In the first preferred embodiment of the invention Remote Management Node **100** is a handheld or portable device or computer, and Managed Node **102** is an electronically activated.fluid dispensing device. During normal operations, the fluid dispensing device emits an infrared pulse from emitter **118** every 250 milliseconds. If an object is within pulse range of the emitted signal, the signal is reflected and the detector **116** detects the reflected signal. If the detector **116** detects the reflected signal, then the electronics **114** will activate a solenoid **101** causing fluid to be dispensed from the faucet assembly.

A handheld computer **100** allows a remote user to interrupt the normal operation of the Managed Node **102**. In order for the handheld computer to communicate with the Managed Node **102**, an optical link **108** is established between the optical interface port **104** of the handheld computer **100** and the optical interface port **106** of the fluid dispensing device **102**. The optical link allows a maintenance user to perform various maintenance function remotely, including retrieving device-specific data stored by the electronics **114** of the fluid dispensing device **102**, adjusting electronics parameters, or reprogramming the software that controls the fluid dispensing device.

### HANDHELD COMPUTER SOFTWARE

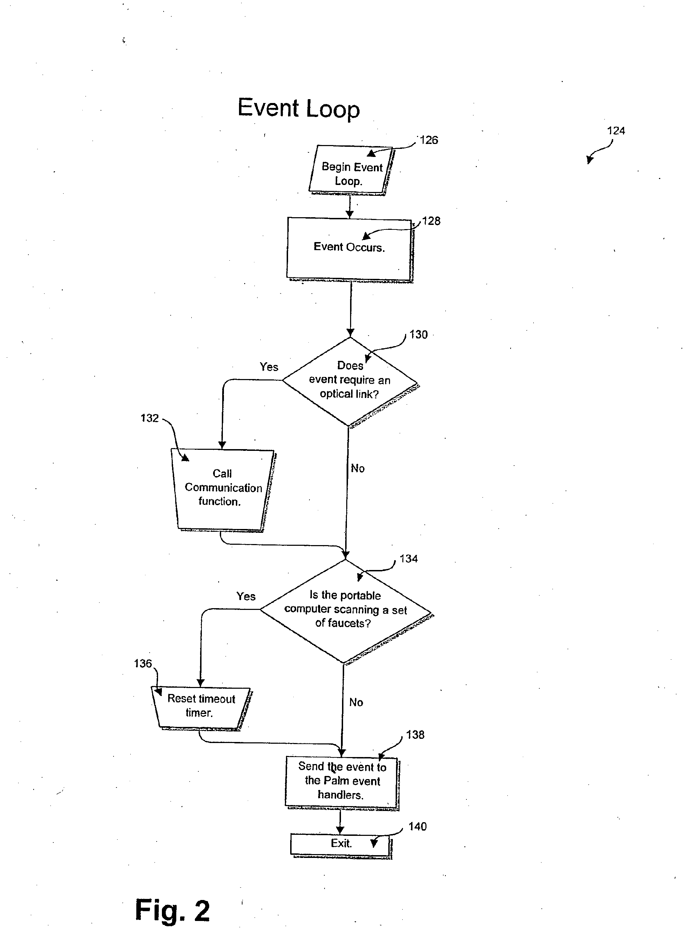

The Remote Management Node Control Logic **120** (**FIG**. **1**) on the handheld computer **100** (**FIG**. **1**) initiates an optical link **108** (**FIG**. **1**) between the optical interface ports **104** and **106** in accordance with a user's instruction. A description of the Remote Management Node Control Logic on the handheld computer **100** is now described in more detail with reference to **FIG2****,** **FIG. 3**, and **FIG. 4**. The flow charts are merely exemplary and other methodologies may be employed to implement the present invention.

The Remote Management Node Control Logic **120** (**FIG. 1**) generally controls a user interface, input and output to the user interface, and input and output through optical interface port **104** (communication between optical interface ports). **FIG. 2** is a high level illustration of the Remote Management Node Control Logic **120** (**FIG**. **1**). Event loop **124** of the Remote Management Node Control Logic **120** (**FIG**. **1**) executes on the handheld computer **100**. In essence, the event loop monitors input and output activity. This monitoring step of the remote management control logic is represented in the event loop **124** by the processing symbol **128.** When an event occurs, the event loop **124** then determines whether the event is one that requires the establishment of an optical link between the handheld computer and the fluid dispensing device in decision symbol **130.** Events that require an optical link include retrieving data from the fluid dispensing device **102** providing a user data accessibility, reprogramming the Managed Node Control Logic **122** on the fluid dispensing device **102 (****FIG. 1****)**, or reconfiguring electronics parameters on the fluid dispensing device **102 (****FIG. 1****).** The decision symbol **130** represents that part in the control logic where the input retrieved from step **128** is analyzed to determine whether the event requires the establishment of an optical link.

If an optical link is not required to perform the function requested in step **128** by the user, then the event loop **124** of the remote management control logic **120** determines whether the user has requested that a group of fluid dispensing devices be scanned as indicated by decision symbol **134**. The scanning of various fluid dispensing devices is discussed further herein. If the event does not require the scanning of a set of fluid dispensing devices, then the event requested by the user is processed in step **138** by the palm event handlers that do not require the establishment of an optical link between the handheld computer **100 (****FIG. 1****)** and the fluid dispensing device **102 (****FIG. 1****)**.

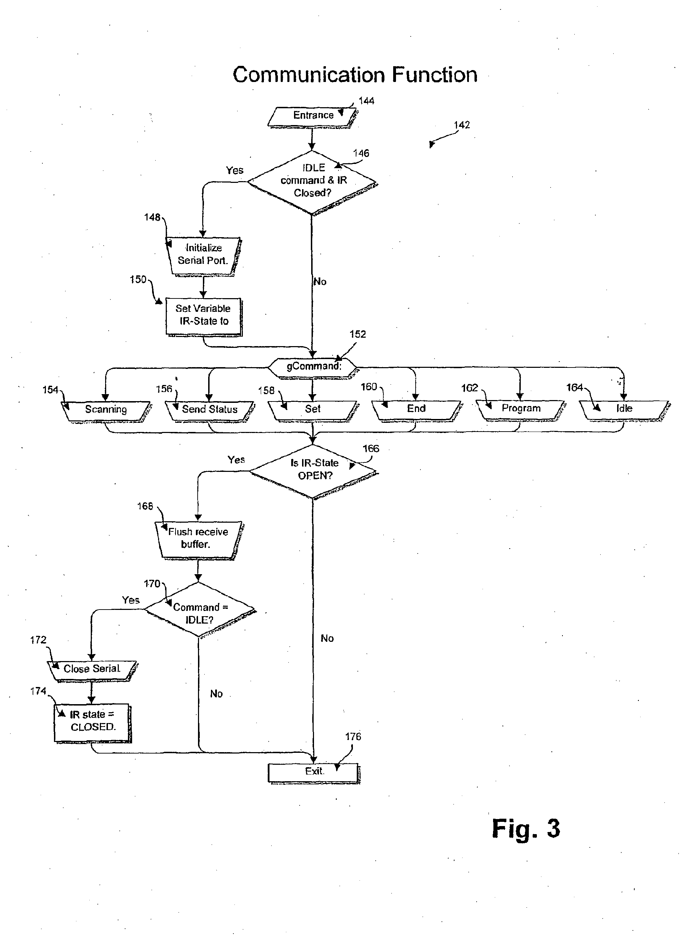

If at the decision symbol **130** it is determined that the requested event requires an optical link, then the communication function is called in processing symbol **132.** The communication function is illustrated in **FIG. 3** and is designated generally throughout as reference numeral **142.** The communication function is entered from step **132** in **FIG. 2** at the input/output symbol **144** in **FIG. 3**.

The communication function **142** first ascertains the status of the optical interface port **104 (****FIG. 1****)** represented by the decision symbol **146** in the communication function **142.** If the port is in a closed state, then the serial port is initialized indicated by the processing step **148.** Once the port is initialized, the IR-State variable is set to OPEN in the processing symbol **150.** Once the port is initialized and the IR-State is set to OPEN, the handheld computer is now configured for communication with the optical interface port **106 (****FIG. 1****)** of fluid dispensing device **102 (****FIG.1****).**

The communication function **142** provides six functional capabilities. Each separate function is indicated as a different indicator in the gCommand variable. The next step **152** is represented by a switch symbol serving as a director to the appropriate function as indicated by the gCommand variable. This variable represents the event requested by the user. The six functions available are represented by the processing symbols and include Scanning **154**, Send Status **156**, Set **158**, End **160**, Program **162**, and Idle **164**.

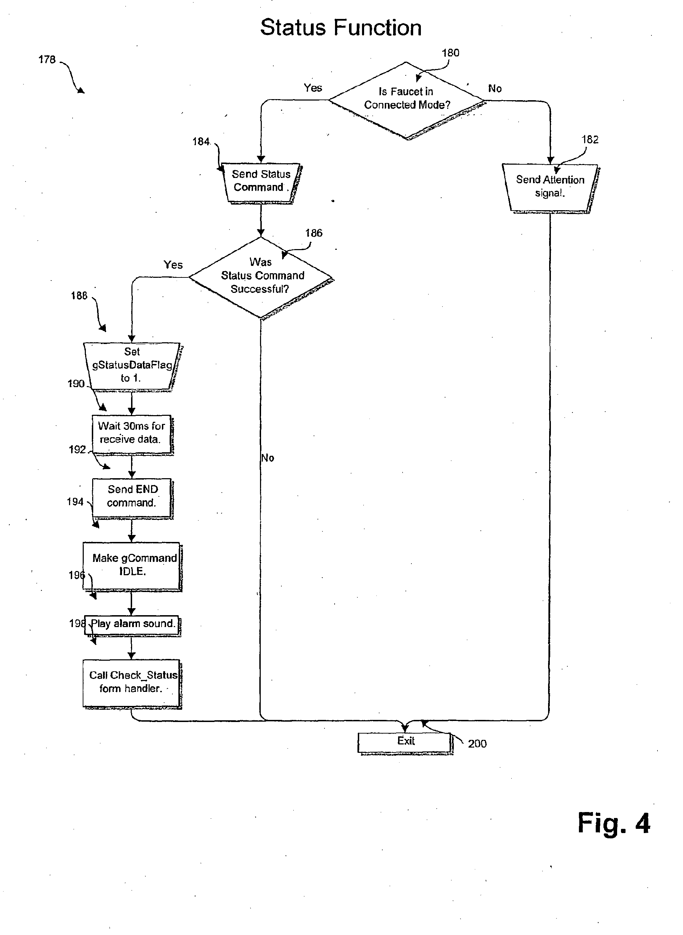

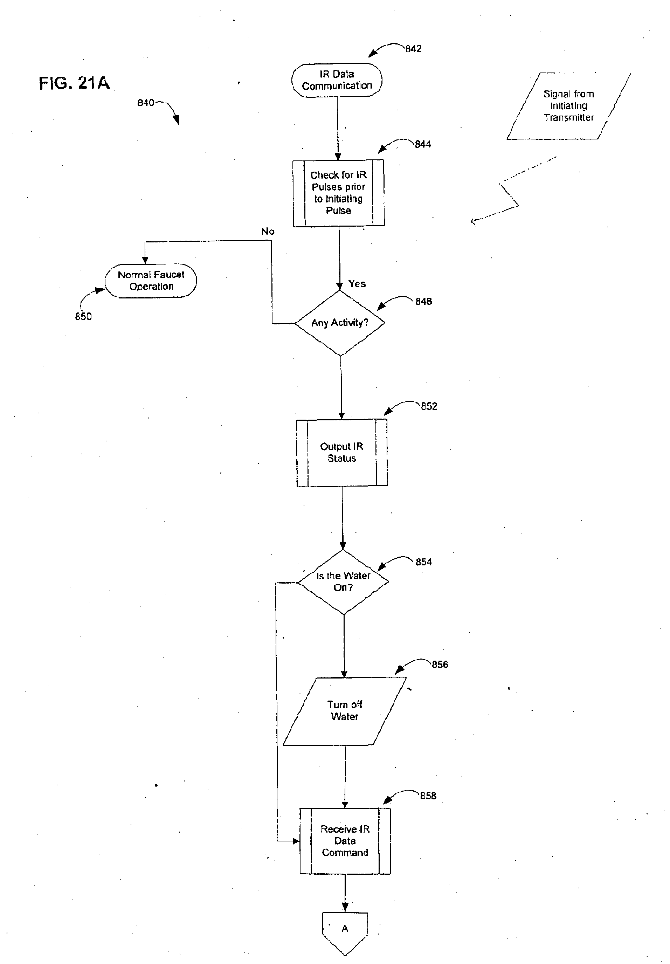

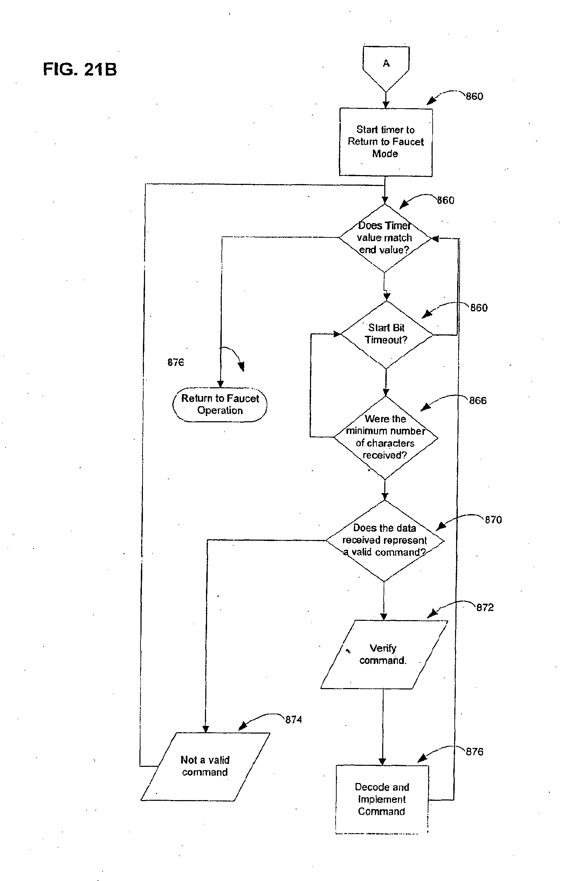

If the user chooses to retrieve from the faucet information about the fluid dispensing device, then at processing symbol **156** the Send Status function **178** in **FIG. 4** is called. **FIG. 4** illustrates in detail the control logic of the Send Status command function **178**. The Send Status function **178** initially determines if the fluid dispensing device is in a connected mode. This step is represented by the decision symbol **180**. The connected mode is present when an optical link **108 (****FIG. 1**) is established. If the connected mode has not been established, then the remote management control logic initiates an optical signal that is emitted from the optical interface port **104 (****FIG. 1****).** This step is represented by the processing symbol **182.** The signal is an Attention Signal and is referred to throughout as such. **FIG. 21** illustrates the logic flow initiated on the fluid-dispensing device when the handheld device attempts to initiate connected mode. **FIG. 21** is described further herein.

If the fluid dispensing device is in connected mode, the Send Status command is sent as represented by the processing symbol 184. The Send Status command requests from the fluid dispensing device a set of data describing various parameters of the device. The set of data includes parameters about the fluid dispensing device including information relating to power, settings, and usage. Power information relating to the fluid dispensing device includes unloaded volts, loaded volts, time in use, and replace battery date. The settings information includes the current operating mode, the range setting, the range offset, delayed settings, and virtual settings. The usage information consists of the number of uses, uses per day, and hours of operation. Other miscellaneous information can include current errors, past errors, software version, PCB number, and engineering change level.

Once the request for the status is sent in processing step **184**, the Send Status function **178** determines whether the command was received. This step is indicated in the software function **178** by the decision symbol **186**. If the request for status information was successful, a flag is set in the processing step **188** and the data is received by the handheld computer as indicated by the processing symbol **190**. The optical link is then terminated when the handheld computer send the End command in step **192**. The gCommand variable is set to idle in the processing step **194**, an alarm is sounded in processing step **196** to indicate to the user successful receipt, and the Send Status function exits in processing step **200**.

If the Status command is not received by the fluid dispensing device, the Send Status function **178** exits in processing symbol **200**.

When the Send Status command module **178** exits, control is returned to the Communications function **142**. In **FIG. 3**, the Communications function **142** then queries the status of the IR serial port in decision step **166**. If the IR-State is OPEN, the receive buffer is flushed in processing step **168**, and the gCommand variable is queried. If the command variable is Idle, then the serial port is closed in processing step **172** and the IR-State variable is set CLOSED. The Communications function exits in processing step **176** returning control of the processing to the event loop **124 (****FIG. 2****).**

With reference to **FIG. 2**, the Event Loop **124** then queries the gCommand variable to determine if scanning is taking place in decision step **134**. If scanning is taking place then the "time out" timer is reset in processing step **136**. If the handheld computer is not scanning a group of fluid dispensing devices, then the event request is handled by functions that do not require the optical communication link **108** in processing step **138**. The event loop then exits in processing step **140.**

### FLUID DISPENSING DEVICE FIRMWARE

With reference to **FIG. 1**, the Managed Node Control Logic **122** of the fluid dispensing device **102** is now discussed with reference to **FIGS. 21A-B****,** **5A-5D****,** **6A-6D****,** and **7A-7D.** **FIG. 21** illustrates the basic functional blocks of the fluid-dispensing device showing the fundamental communication components.

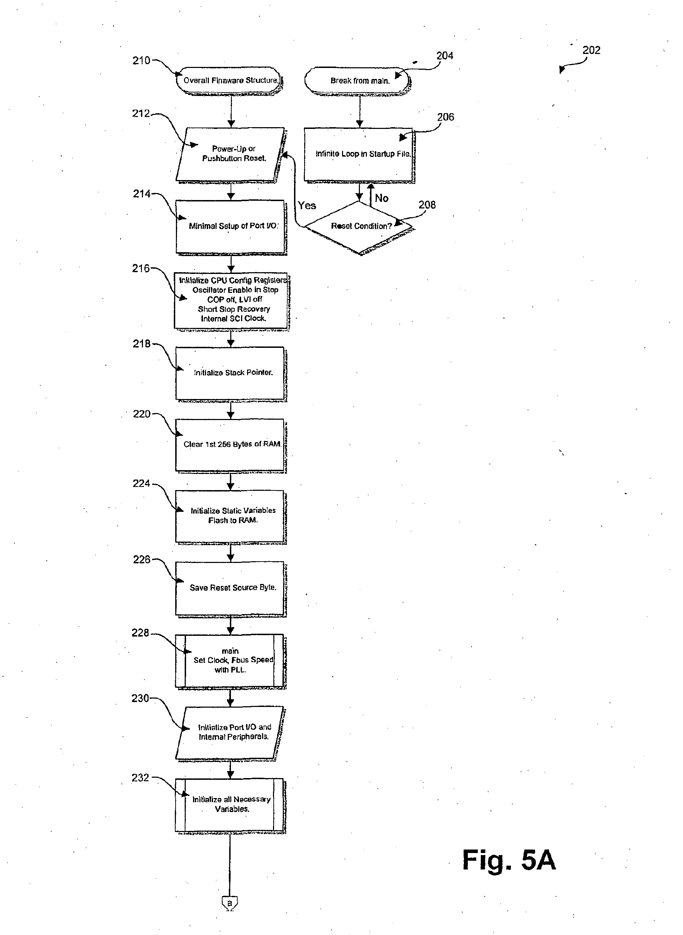

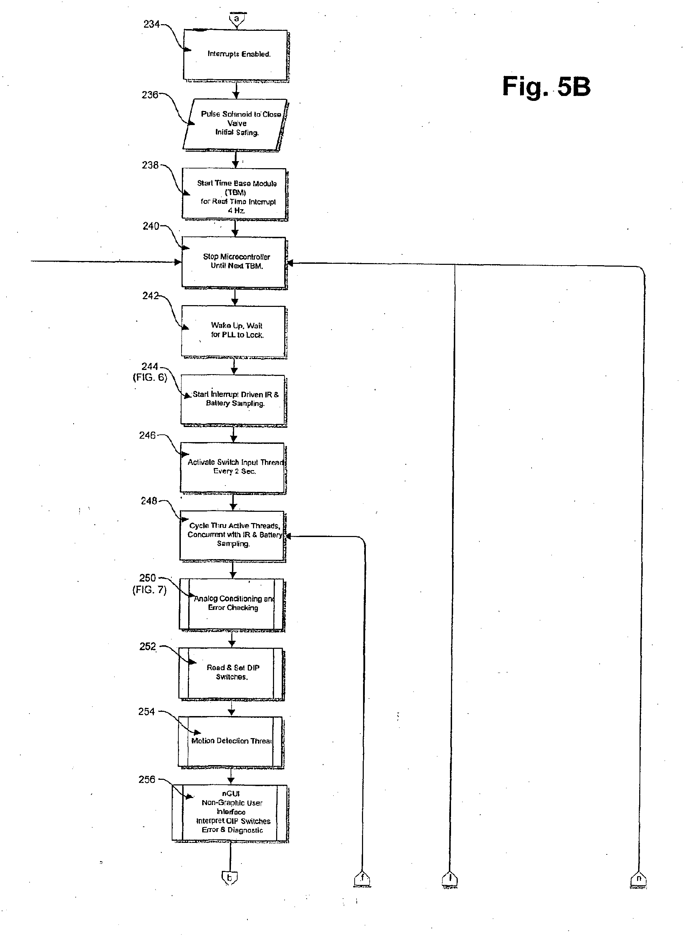

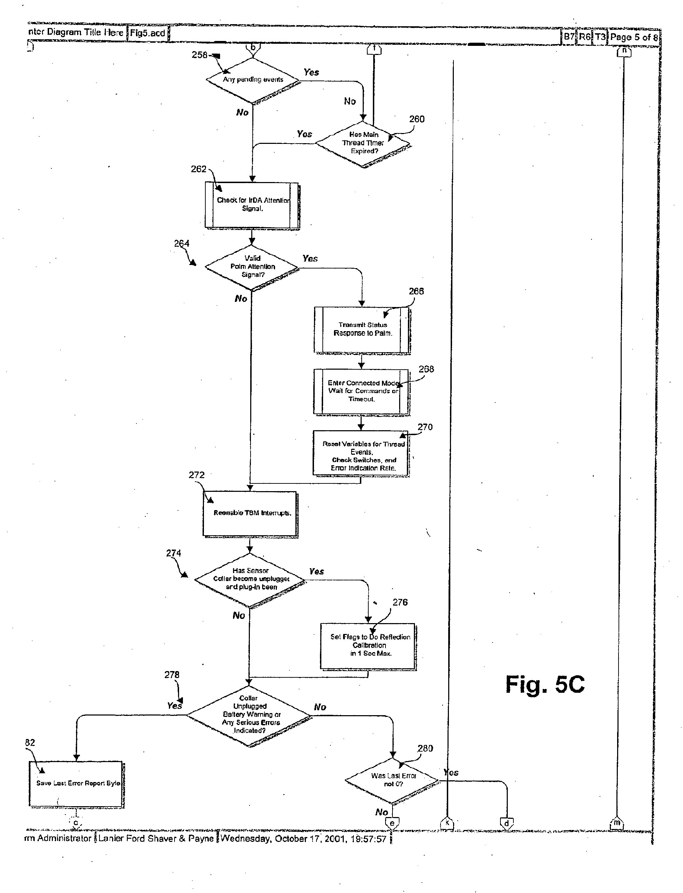

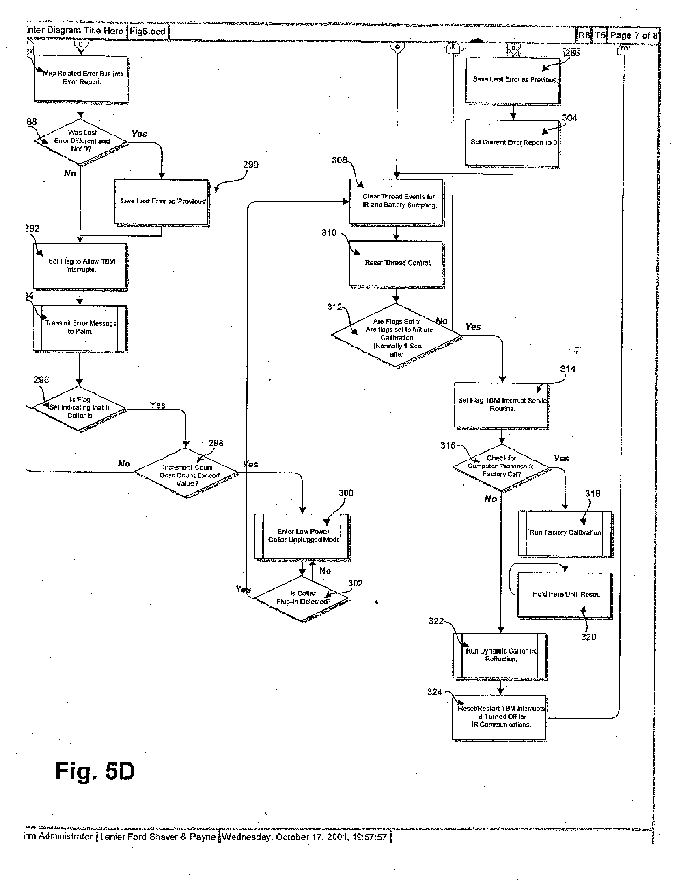

With reference to **FIG. 21**, the logic flow of the fluid dispensing device response to a request for Connected Mode from a handheld device is shown and is generally referred to throughout as reference numeral **840**. The fluid-dispensing device response to a request for connected mode is initiated by an IR signal from the handheld device as shown by the signal transmission block **842**. This initiating signal is the Attention Signal as discussed infra. During a pulse cycle, which is discussed further herein and is described in **FIG. 5**, the detector **116 (****FIG. 1****)** samples its detection range to determine whether an initiating transmission was sent from the emitter **105 (****FIG. 1****)** in a process illustrated by independent process symbol **844**. This process samples its detection range for the Attention Signal prior to initiating a detection pulse for object reflection.

The format in which the signal is sent indicates that the signal detected is an Attention Signal, and those skilled in the art will recognize various ways that the Attention Signal can be formatted to accomplish this indication. In a preferred embodiment the Attention signal includes a stream of 'FF' characters followed by a linefeed. Also, the duration of the signal is greater than the length of the pulse cycle.

Decision symbol **848** illustrates the query that determines whether the sample received by the detector was an Attention signal (i.e. contained 'FF' characters followed by a linefeed. If the signal detected is not the Attention signal, then the fluid-dispensing device continues its normal operation as represented by terminating symbol **850**.

If, on the other hand, the Attention Signal is received, the fluid dispensing device responds as indicated in independent process symbol **852**. In decision symbol **854** the current state of the water flow is queried. If the water is currently on, the water is turned off as indicated by processing symbol **856**, prior to responding to the request for connected mode.

In independent processing symbol **858**, the command sent by the handheld computer is received. The various commands that can be sent by the handheld computer are described infra and include Scanning **154**, Send Status **156**, Set **158**, End **160**, and Program **152 (****FIG. 3****).**

A timer starts in processing symbol **860** to return to nonnal operation after a fixed amount of time. Decision symbol **860** determines whether the End command **160** (as shown in **FIG. 3** and described supra) has been sent. If the End signal is sent, then the fluid-dispensing device returns to normal operation in terminating symbol **876**. If the End command has not been detected, then the process **840** determines in decision symbol **862** whether the entire signal has been sent. If the entire signal has been sent, according to the bit count expected, then the process determines in decision symbol **866** whether the entire signal was sent. If the command is a valid one, as determined by decision symbol **870**, then the command is decoded and implemented in processing symbol **876**. Connected Mode is then terminated through decision symbol **860** at termination symbol **876**.

**FIGS. 5A-5D** illustrate the control logic **122** that controls the electronics **114 (****FIG. 1****)** of the fluid dispensing device **102**, thereby controlling the communication on the fluid dispensing device node side of the optical link **108**.

With reference to **FIG. 5A**, as indicated by the processing symbol **202**, the fluid dispensing device is powered on or reset. Numerous setup functions are performed in processing steps **214-234 (****FIG. 5A****)** and **236-238 (****FIG. 5B****).** Specific functions related to data communication operations are indicated by processing symbol **230** including initializing the input/output ports, CPU peripheral initialization, and time base module (tom) process **236 (****FIG. 5B****)** initialization. The,TBM is responsible for the timing of the IR pulse every 250 milliseconds. It performs the real time interrupt that occurs every 250 milliseconds for cycle timing, and it monitors seconds and hours.

With reference to **FIG. 5B**, a pulse cycle includes generally powering up the microprocessor, attempting the detection of the Attention signal emitted by the handheld computer, emitting a pulse from the fluid dispensing device emitter, and powering down the microprocessor. The processing symbol **240** is the first processing symbol in this process. It indicates that the process element included in the electronics component **114** (**FIG. 1**) is powered off as a first step in a pulse cycle. The TBM determines that 250 milliseconds have elapsed, and the microprocessor is awakened as indicated by processing symbol **242**. In this processing step, the overall firmware process **202** also waits for the phase-locked loop to lock in order to maintain a constant 4.0 MHz for normal operation.

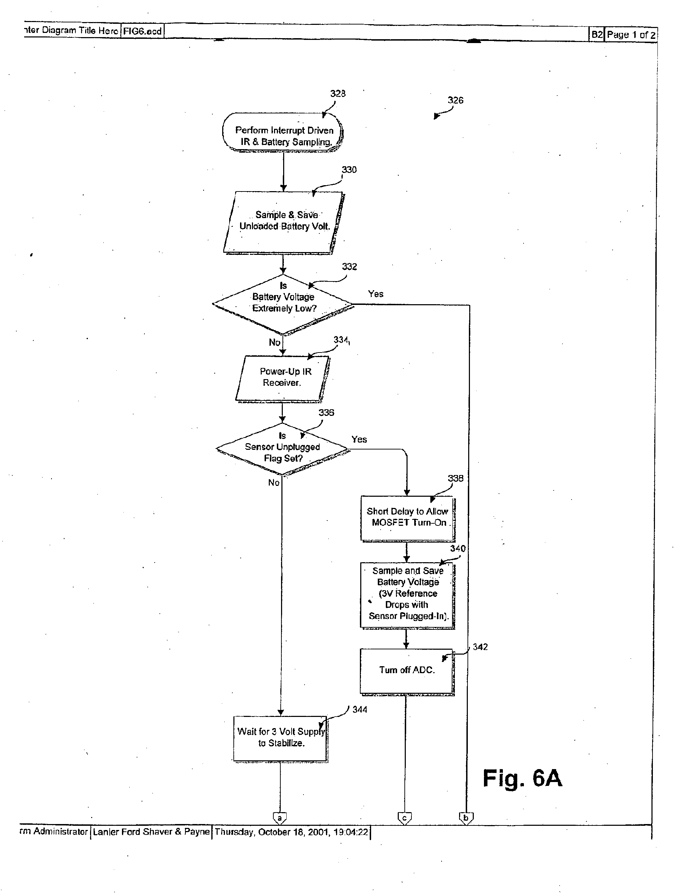

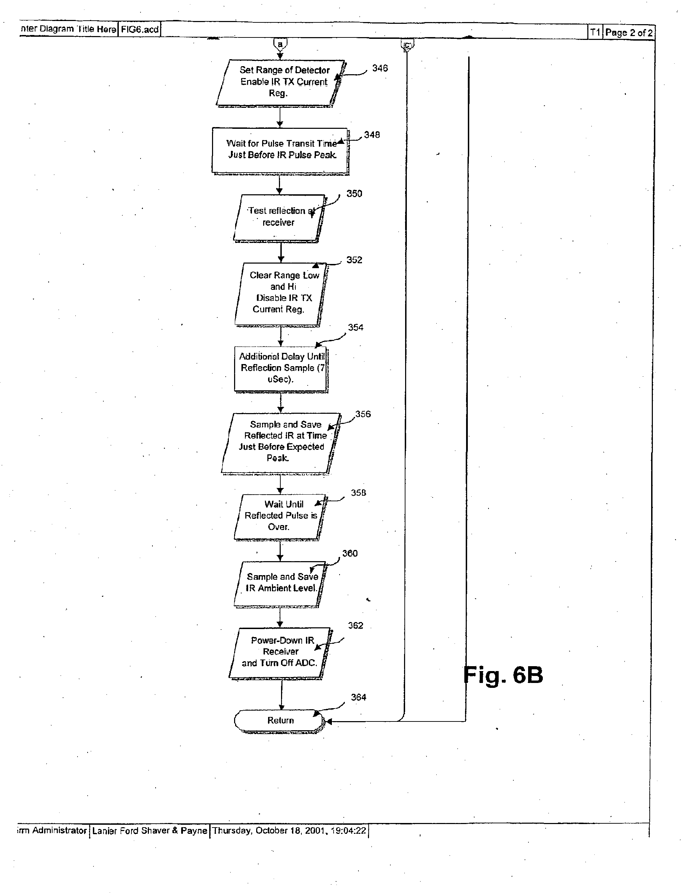

The processing symbol **244** represents the initiation of the interrupt driven IR and Battery Sampling Routine. The interrupt driven IR and Battery Sampling Routine is now discussed with reference to **FIG. 6A** and **6B****.** The Interrupt Driven IR and Battery Sampling Routine begins at input symbol **328** in **FIG. 6A** and is designated general throughout as reference numeral **326**.

The IR and Battery Sampling Routine is interrupt driven and is generally responsible for sampling the battery voltage and obtaining a reflected sample of an IR pulse from the emitter **118 (****FIG. 1****).** The processing step **330** represents the sampling and saving of a battery voltage reading. The decision step in **332** determines whether the battery voltage is extremely low. If the battery voltage is low, then the IR and Battery Sampling Routine **326** returns to the overall firmware program **202** represented by the output symbol **364** in **FIG. 6B****.** If the battery voltage is not low, then the IR receiver is powered on, which is represented by processing symbol **334.** In decision symbol **336**, the optical sensor flag is examined to determine if the detector **116** (**FIG. 1**) is connected. If the optical sensor flag indicates that the detector **116 (****FIG. 1****)** is unplugged, only the loaded battery voltage is sampled. In processing step **338** the MOSFET is turned on, the loaded battery voltage is sampled and saved, as represented by processing step **340**. The Analog to Digital Converter (ADC) is then turned off, as represented by processing step **342.** Routine **326** then exits in terminator symbol detector **364 (****FIG. 6B****)**

If the detector is not unplugged, as indicated in decision step **336**, then the Routine **326** waits for the 3 volt power supply to stabilize, as indicated by processing step **344**.

In processing symbol **346** the range on the optical sensor is set to low or high, and the IR transmit regulator is enabled to initiate a pulse. With reference to **FIG. 6B**, once the infrared transmit pulse is enabled, the Routine **326** waits for the pulse time then tests the detector **116** to determine a reflection in processing symbols **348** and **350**, respectively. The IR transmit is then disabled in processing step **352.** Processing step **354** indicates that an additional delay of approximately 7 microseconds is allowed so that an entire reflection sample can be detected. The reflected IR is sampled and saved just before the pulse peak in processing step **356**. Once the reflected pulse is completed, the IR ambient level is sampled and saved in processing step **360**. The IR receiver and the ADC are then turned off. The IR and Battery Sampling Routine **326** then returns to the thread handler in **FIG. 5****.**

Processing step **246** represents enabling the switch input thread that is executed every 2 seconds. This thread queries the necessary input mode and makes changes accordingly.

Processing step **248** represents a ``kernel" loop that cycles through and calls each of the other active threads. Each thread has separate phases, which are typically run once each thread call, and control movement to the next phase. Thread diagrams show one phase of the same thread run directly after the last. Any other active threads and their current phases would run before the same thread is accessed again.

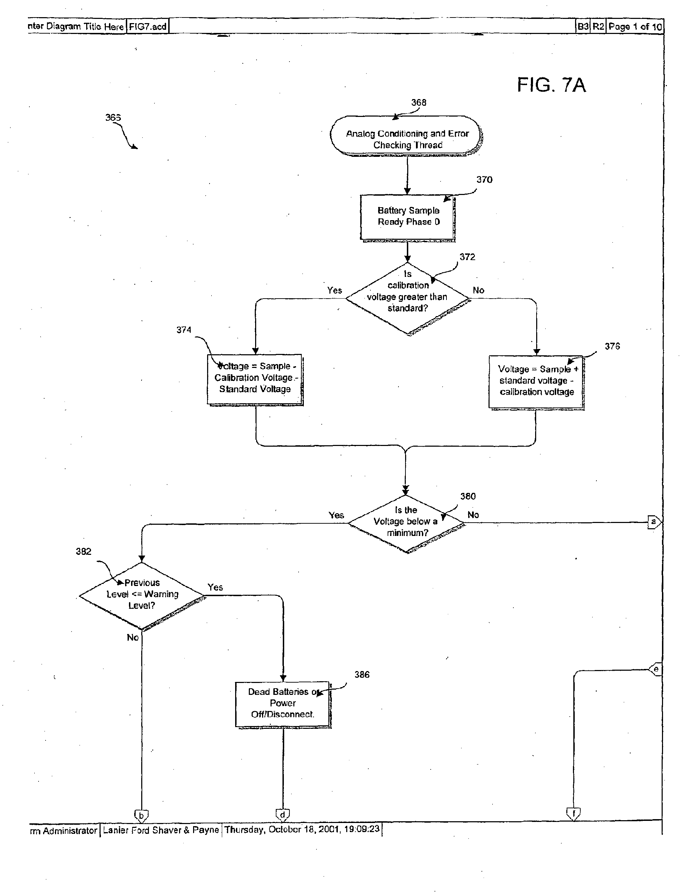

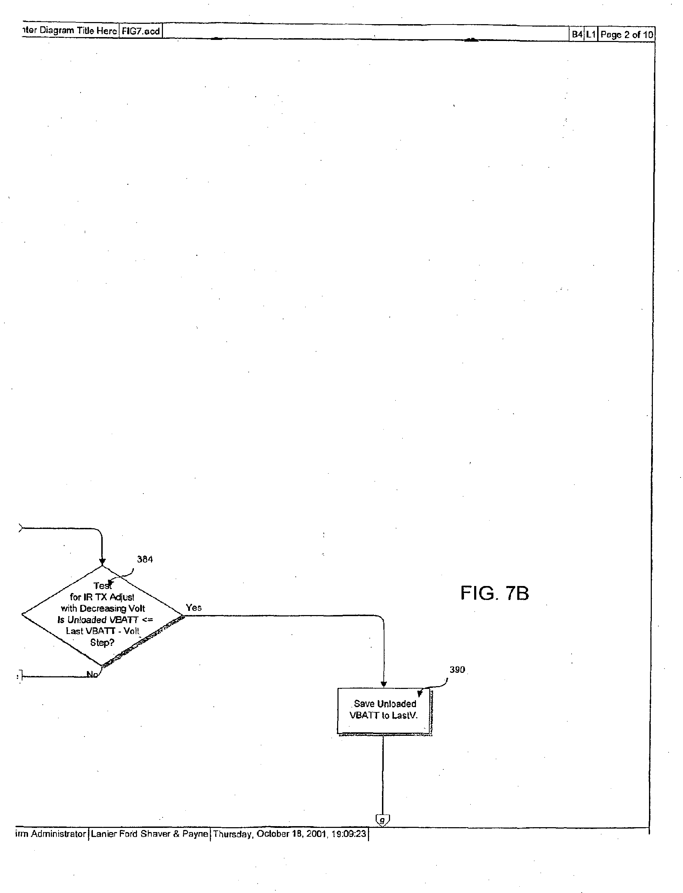

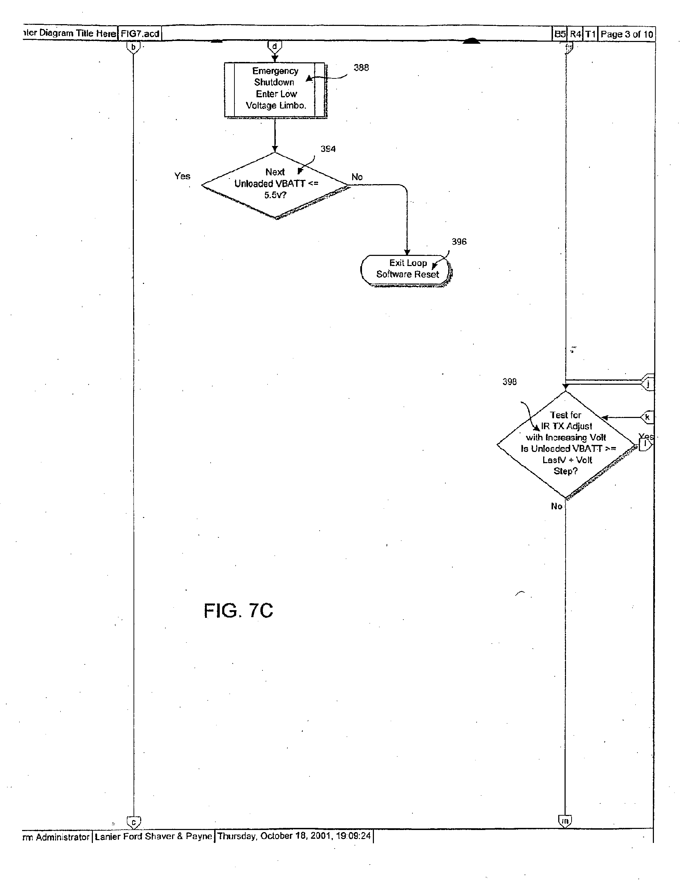

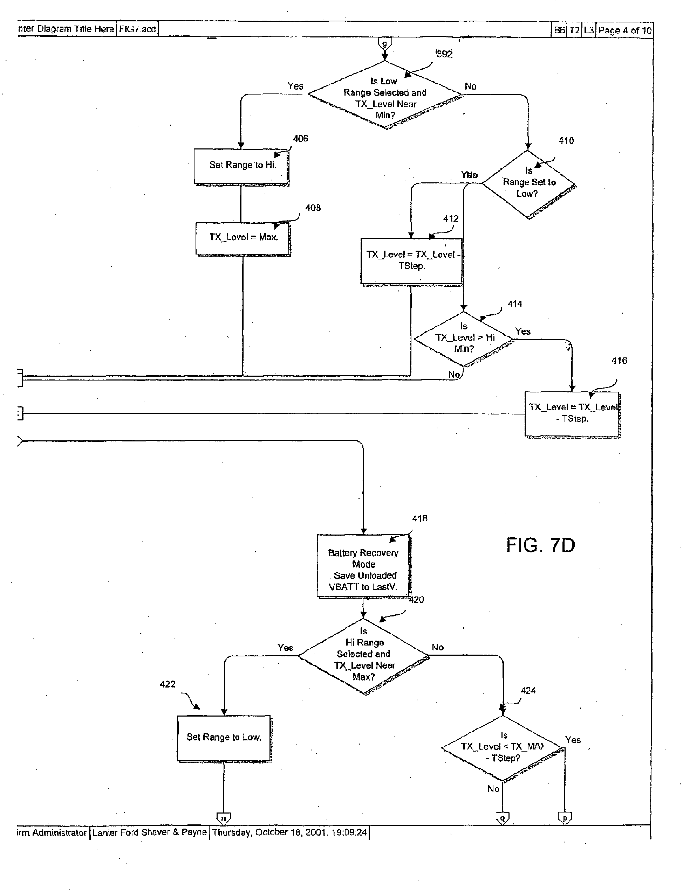

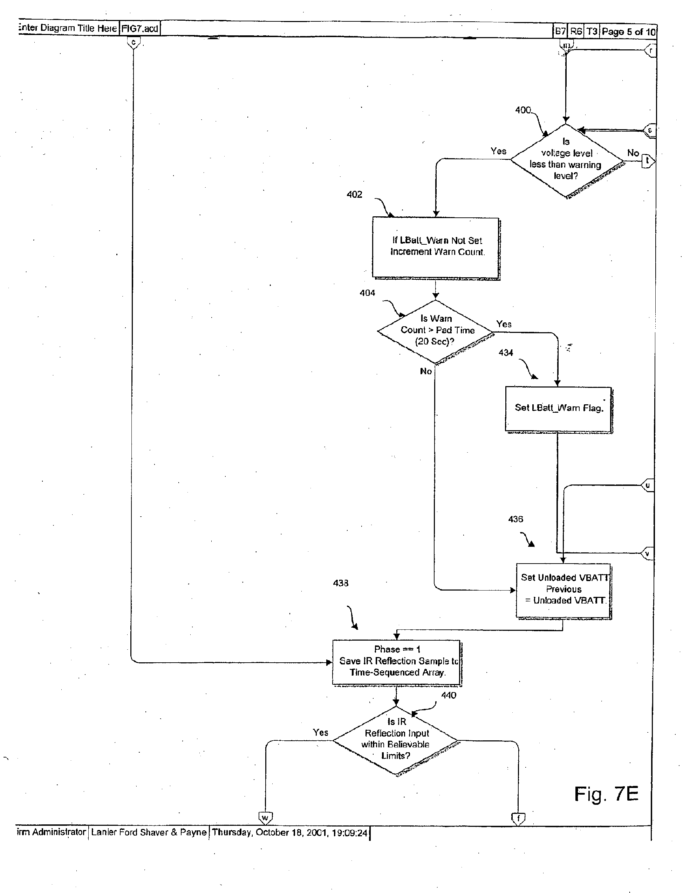

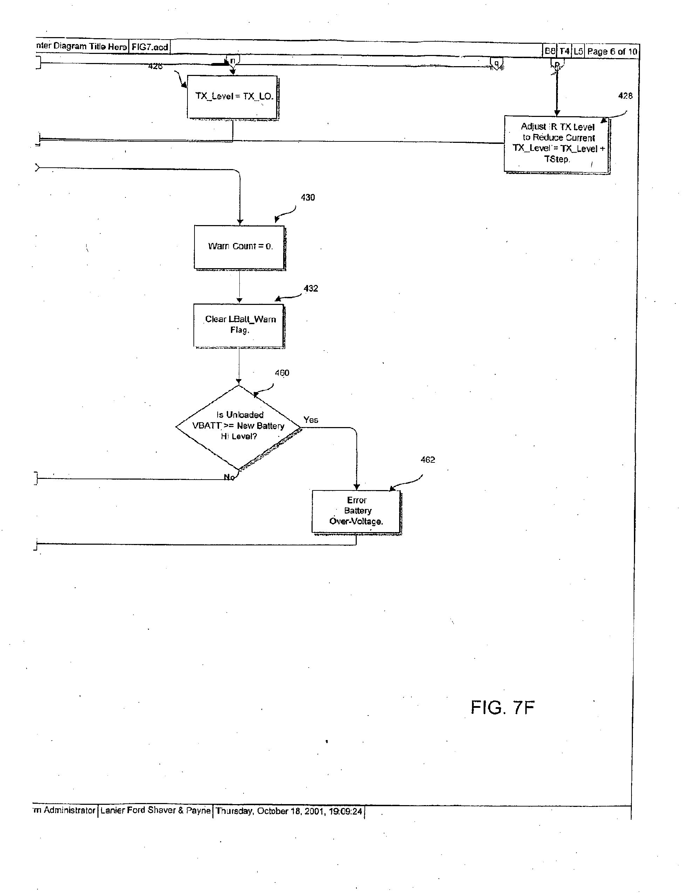

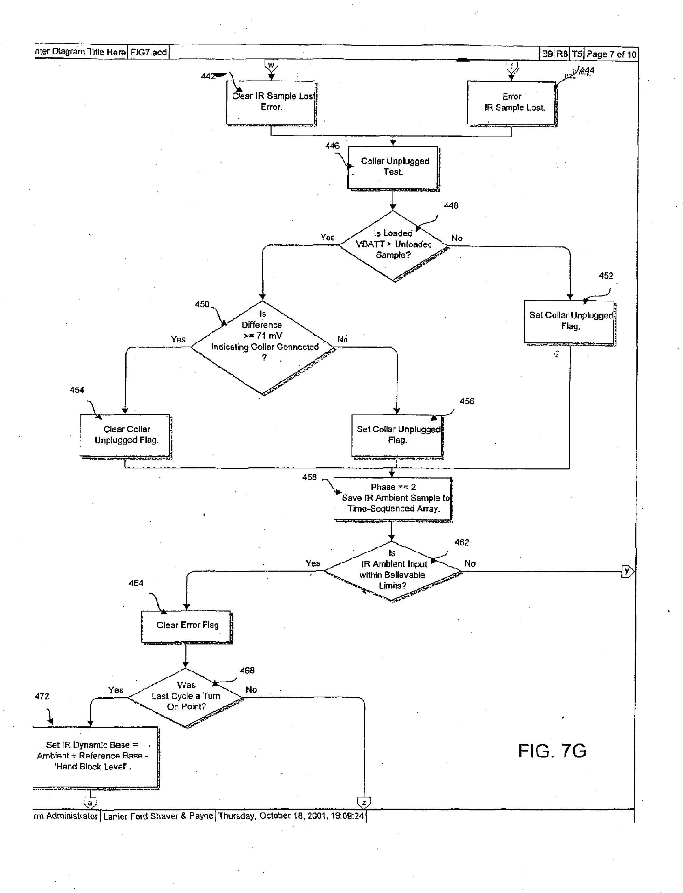

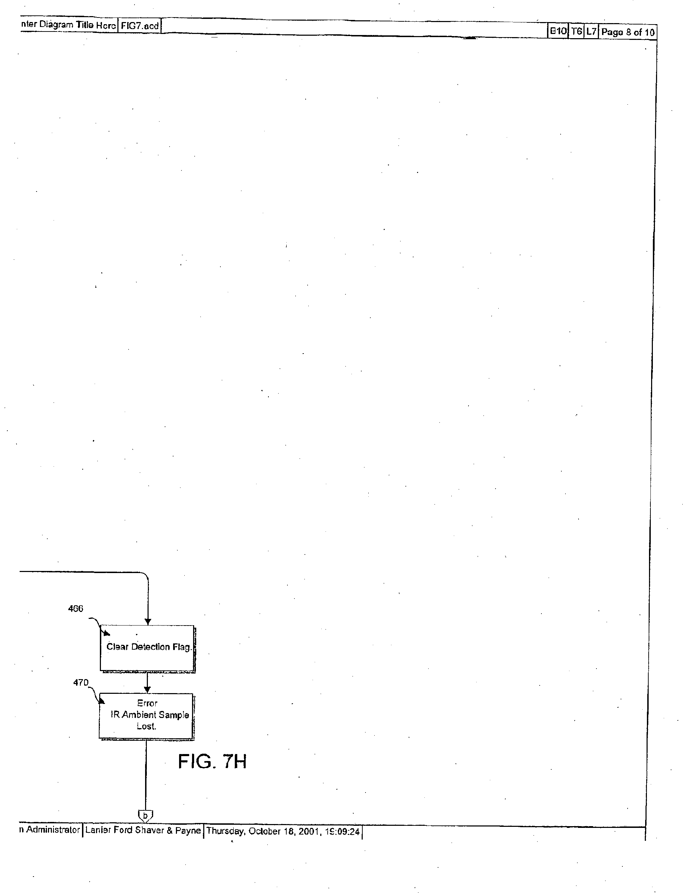

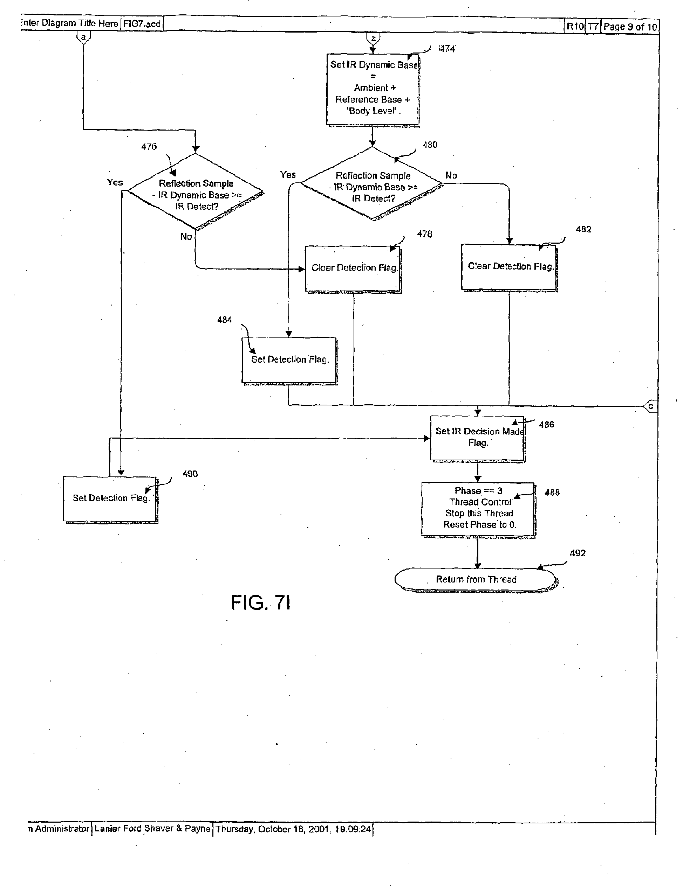

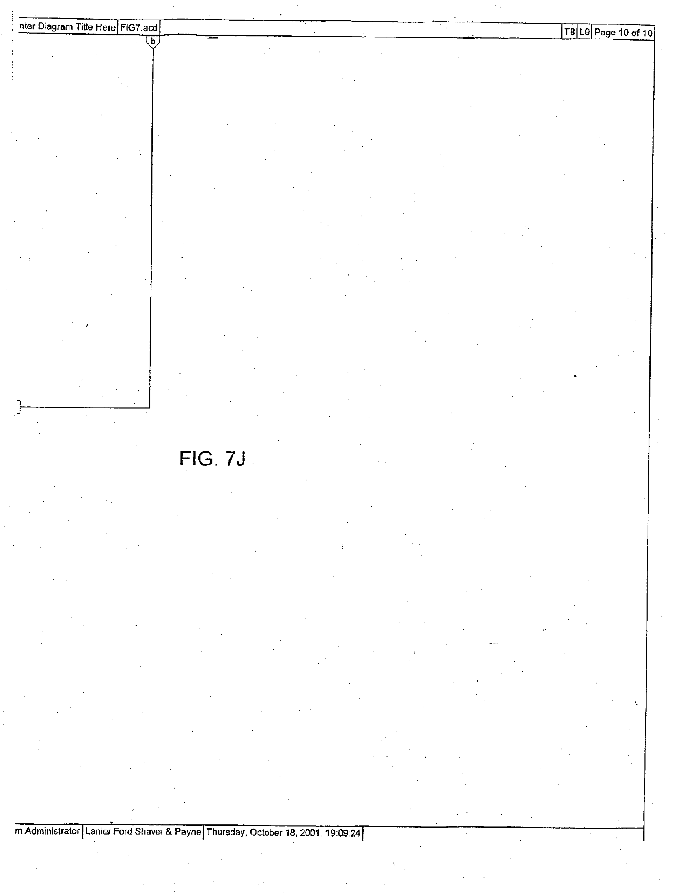

The next processing symbol **250** represerits a thread that is responsible for performing analog conditioning and error checking on values obtained from the battery and the infrared receiver. **FIG. 7** is a flow chart of the Analog Conditioning and Error Checking Thread represented by the processing step **250**. The program starts at input symbol **368** in **FIG. 7A****.**

The thread represented by **FIG. 7** has four phases including phase 0, phase 1, phase 2, and phase 3. Phase 0 performs an analysis on the battery voltage level of the system and makes adjustments in the system to compensate for voltage changes. Phase 0 begins in processing step **370** in **FIG**. **7A** with a battery sample from the IR and Battery Sampling Routine **326** illustrated in **FIG**. **6**. The voltage of the battery is initially sampled at calibration time. The calibration voltage is stored and is used in determining the operating voltage of the system. The calibration voltage is compared to a standard value that is a constant value stored in the system. Standard voltage is a constant expected value of the voltage of the system under normal conditions. The calibration voltage and the standard voltage are compared as indicated by the decision symbol 372. The current real-time battery voltage is then calculated. If calibration voltage is greater than the standard voltage, then the battery voltage is determined as represented by processing symbol **374**, subtracting from the sample obtained from the IR and Battery Sampling Routine **326** the difference between the calibration voltage and the standard voltage. If the standard voltage is greater than the calibration voltage, then the current real-time battery voltage is determined as represented by processing symbol **376**, adding to the sample voltage the difference between the standard voltage and the calibration voltage. Next, the battery voltage is analyzed as indicated by the decision symbol **380** to determine if the voltage is below an operational level. If the voltage is below operational level and the previous voltage level obtained from a prior sample is less than or equal to a warning level, then the system is entered into emergency shut down mode as indicated by the predefined processing symbol **388.**

With reference to **FIG. 7C**, as indicated by the decision symbol **394**, the current real-time voltage is compared to 5.5 volts. If it is greater than 5.5 volts, then the thread exits and the software is reset, as indicated in symbol **396**. If the previous voltage level is greater than the voltage warning level, then the thread enters Phase 1 in **FIG. 7E****.**

If, however, as indicated in the decision symbol **380**, the voltage is not below an operational level, processing symbol **384 (****FIG. 7B****)** and processing symbol **398 (****FIG. 7C**) indicate that the IR and Battery Detection Thread adjusts the IR emitter power corresponding to changes in the operating voltage of the system. With reference to **FIG. 7B**, if the voltage has decreased since the last battery voltage sample, then the current real time battery voltage is saved to a variable, LastV, representing the previous sample voltage value, as indicated by processing symbol **390.**

With reference to **FIG. 7D** the emission power level of the IR emitter is then adjusted to compensate for the decrease in the overall system power changes. The decision symbol **392** indicates that the range of the optical emitter is examined. If the range of the optical emitter is selected low and the transmit level is at a minimum, then the range of the emitter is set to high and then transmit level is set to a maximum as indicated by processing symbols **406** and **408**, respectively.

When the loaded voltage of the system decreases, more power is provided to the emitter to compensate for the decrease. This allows the emitter to have a more constant range. If the range is not selected as low, as a result of the query indicated by decision symbol **392**, then the decision symbol **410** indicates that the range is analyzed to determine if it is low. If the range is low, but the transmit level is not at a minimum, then the transmit level is altered in processing symbol **412** subtracting from the transmit level a variable integer, Tstep.

This allows decreasing adjustment of the transmit level where the range of the device is already toggled low, yet the power of the system has decreased. Decreasing the transmit level decreases the required power of the emitter. If the query in decision step **410** indicates that the range is not set low, then decision symbol **414** determines if the transmit level is at a minimum high. If it is, then the transmit level is altered in processing symbol **416** by subtracting from the transmit level a variable integer, Tstep.

If the overall system voltage has increased since the last battery voltage sample, then decision symbol **398 (****FIG. 7C****)indicates** an adjustment for an increase in overall system operating voltage. With reference to **FIG. 7D**, processing symbol **418** examines the current real time operating voltage to determine if the voltage is greater than the last voltage reading. If the current voltage is greater than the last voltage reading, then decision symbol **420** queries the range and the transmit level of the IR emitter. If the range is selected as high and the transmit level is at a maximum , then the range is set to low in processing symbol **422** and the transmit level is set to low. If the transmit level is not at a maximum, then the transmit level is examined to see if it is less than the maximum transmit level subtracting an integer variable, TStep. If the transmit level is capable of being adjusted from the query in decision step **424**, then the processing step **428** (**FIG. 7F**) indicates that the IR transmit level is adjusted, providing the sensor more current. This is accomplished by increasing the transmit level by a variable integer, Tstep.

Once the IR emitter transmit level is adjusted for either an increase or a decrease in overall system power, the IR and Battery Detection Thread **366,** as indicated in **FIG. 7E**, examines the overall system voltage reading in decision symbol **400.**

If the voltage level is below the warning level, then a flag is set in processing symbol **402** that indicates that the voltage level is below the warning level. With reference to **FIG. 7F**, if the voltage level is greater than the warning level, then the warning count is set to zero in processing symbol **430,** and the voltage low warning flag is cleared in processing symbol **432**. The unloaded battery voltage is compared to the battery high level in decision symbol **460.** If the voltage is high an error is indicated in processing symbol **462.** Then the previous voltage variable is set to the current voltage value in processing symbol **438.**

With reference to **FIG. 7E**, at processing symbol **404,** if the warning count indicates a 20-second low voltage, then the low battery warning flag is set. In processing symbol **432**, the current real time voltage reading of the overall system is saved to the variable indicating the previous voltage reading to be used by the next iteration of the IR and Battery Detection Thread **366.** Phase one begins at processing symbol **438.**

The starting point for phase one is indicated by processing symbol **438** in **FIG. 7E****.** Phase one (1) of the Analog Conditioning and Error Checking Thread **366** is responsible for determining if the IR sample received from the IR and Battery Sampling Routine is within believable limits. In addition, phase one examines the IR electronics to determine if the electronics are in working order.

The IR reflection sample received in the IR and Battery Sampling Routine **326** is saved to a time-sequenced array in processing step **438**. The decision symbol **440,** indicates that the array is examined, comparing it to believable values. With reference to **FIG. 7G**, if the values are valid, then an error is not indicated and the IR Sample Lost Error flag is reset in processing symbol **442.** If the values do not appear to be valid, then the Error flag is set in processing symbol **444.**

In processing symbol **446,** a test is performed on the overall system voltage to determine if the collar that contains the electronics **114** (**FIG. 1**) is working properly. The decision step **448** indicates that the voltage is examined comparing the normal operating voltage of the overall system to the voltage value at a time when the IR electronics are operating (this value is indicated as loaded voltage). If the loaded voltage is greater than the normal operating voltage, then the difference between the two voltages is examined as indicated by decision symbol **450**. If the difference between the two voltages is greater than or equal to 71 mV, then the comparison indicates that the IR electronics (the collar) are in working order, and the flag indicating an error is cleared in processing symbol **454**. If the difference is less than 71 mV, then the flag is set in processing symbol **456** to indicate an error.

If the symbol **448** indicates that the loaded voltage is less than the normal operating voltage, this indicates that the IR electronics are not working properly. Consequently, the error flag is set in processing step **452**.

Phase two begins at processing symbol **458**. Phase two of the Analog Conditioning and Error Checking Thread **366** examines the IR ambient sample received in the IR and Battery Sampling Routine **326 (****FIG. 6****)** indicated by processing symbol **360 (****FIG. 6B****)**. The ambient sample is an IR sample by the detector **116 (****FIG. 1****)** when the emitter **118** (**FIG**. **1**) is not active; therefore, the ambient sample is an IR reading that indicates the normal environmental IR present.

With reference to **FIG. 7G**, as indicated by decision symbol **462**, the ambient sample is saved to a time-sequenced array, and the query determines whether the IR ambient sample is within believable limits.

If the value is not within believable limits, the detection flag is cleared in processing symbol **466** and an error is set that indicates that the IR ambient sample is not valid. The flag indicating that the decision has been made is set in processing symbol **486.** If the IR ambient sample is within believable limits, then an error flag is reset to indicate no error in processing symbol **464.** Next, the decision symbol **468** indicates a query to determine if the last pulse cycle resulted in activation of the fluid dispensing device. If the last cycle resulted in the activation of the fluid dispensing device, then the IR dynamic base is set to the sum of the ambient value and the reference base decreased by the "hand block level" as indicated in processing symbol **472**. The "hand block level" a constant value subtracted in order to account for errors in invalid detection readings.

With reference to **FIG. 7I**, if the difference between the reflection sample and the IR dynamic base is greater tan the detection value, the detection flag is then set in processing symbol **490**. Because the IR dynamic base does not include the previously reflected IR from the user's hands, the difference between the IR dynamic base and the reflection sample will indicate detection. If the decision symbol **476** query does not indicate that an object is present, then the detection flag is cleared as indicated by processing symbol **478**. Lastly, the IR decision made flag is set in processing symbol **486**.

If the last cycle did not result in the activation of the fluid dispensing device in decision symbol **468** (**FIG. 7G**), then the IR dynamic base is set equal to the sum of the ambient value and the reference base increased by the "Body Level" as indicated in processing symbol **474.** The "Body Level" is a constant based on the current range setting of the detector, requiring more energy to turn on the faucet. As indicated by the decision symbol **480**, if the difference between the reflected sample obtained in the IR and Battery Sampling Routine **326** and the dynamic base is greater than or equal to a detection value, then the detection flag is set in processing symbol **484**. Thereafter, the IR decision made flag is set in processing symbol **386**. If, on the other hand, the difference is not greater than or equal to the detection value, then the detection flag is cleared in processing symbol **482**, and the IR decision made flag is set as indicated by processing symbol **486**.

Phase three of the Analog Conditioning and Error Checking **366** releases thread control and resets the phase of the thread to zero. This is indicated in processing step **488**. The thread then returns as indicated by termination symbol **492**.

The overall firmware operation **202** in **FIG. 5** continues at processing symbol 252 in **FIG. 5B**. In processing symbol **252**, the DIP switches of the system are read to ensure proper operation modes.

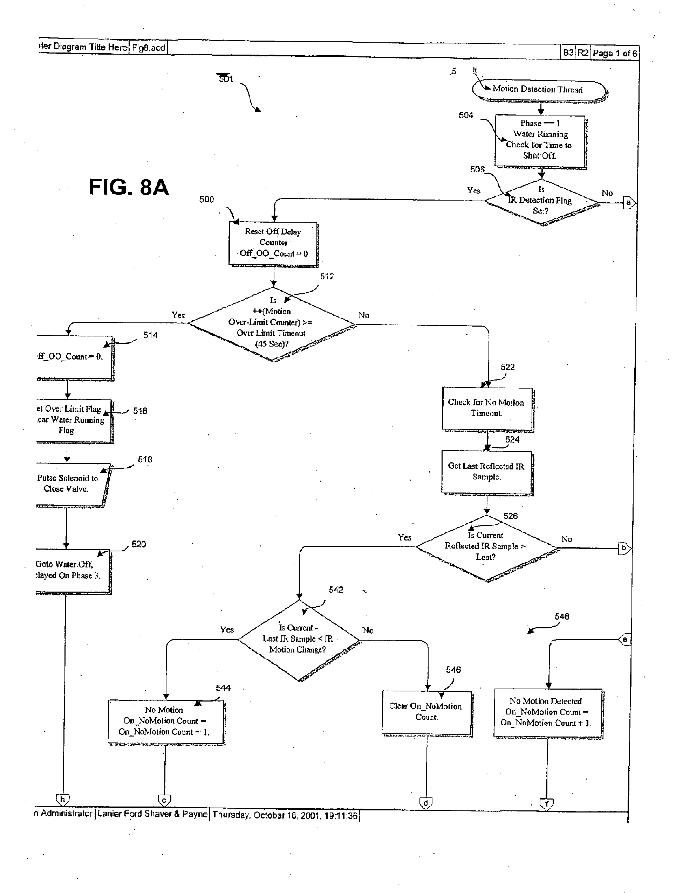

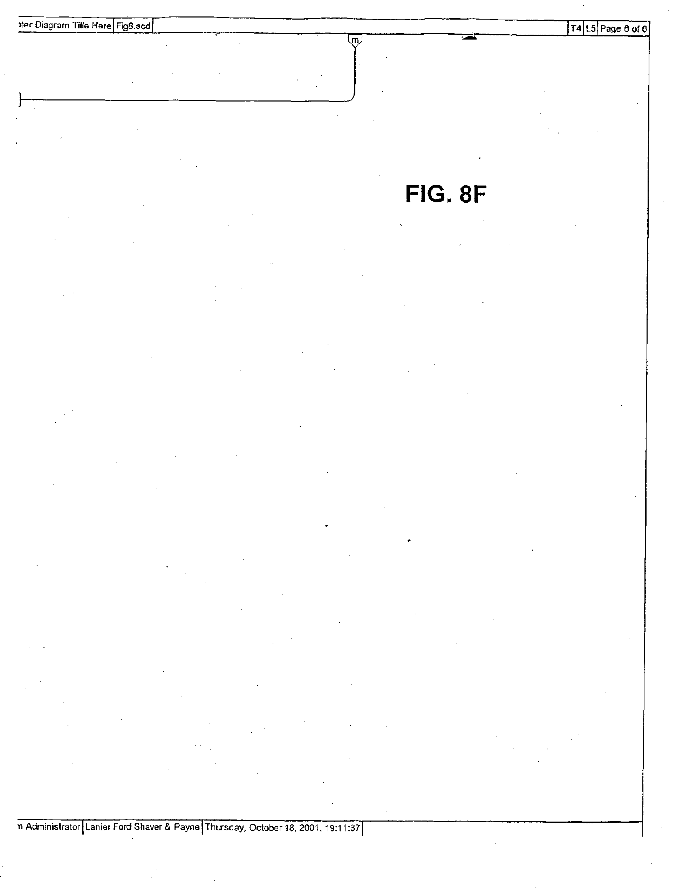

Processing symbol **254** indicates a call to the Motion Detection Thread **501,** the flowchart for which is illustrated in **FIG. 8A-8D**. The Motion Detection Thread **501** is that functional part of the software that determines if the fluid dispensing device should remain activated in light of motion detected by the emitter/detector pair.

With reference to **FIG. 8A**, the Motion Detection Thread 501 begins at processing symbol **504** at phase one. As indicated by processing symbol **504,** Phase 1 of the Motion Detection Thread **501** is executed when the device is currently dispensing fluid. The decision symbol **506** queries the IR Detection Flag to determine if an object was detected by the IR and Battery Sampling Routine **326.** If the Detection Flag is set, the counter for water flow timeout is set to zero (0) as indicated in processing symbol **500.**

The decision symbol **512** determines whether the water has been running for more than forty-five (45) seconds, which is a timeout limit. If the water has been running more than 45 seconds, then an over limit flag is set indicating that the water running limit is reached, and the flag indicating that the water is running is reset or cleared as indicated by processing symbol **516**. The solenoid is pulsed to close the valve in processing symbol **518**.

w If the water has not been running for more than forty-five seconds in processing symbol **512**, then the 45 second timeout is checked in **522**, and the last reflected IR sample is retrieved in **524**. The last reflected sample obtained in the IR and Battery Sampling Routine **326** is then compared to the current IR sample in decision symbol **526**. If the current sample exceeds the previous sample, then the last IR sample is subtracted from the current IR sample. If the difference is less than a predetermined value that indicates a motion threshold in decision symbol **542,** then a flag indicating that no motion was detected is incremented as indicated in processing symbol **544.** If the difference is not less that the predetermined value, then a flag indicating that motion was not detected is reset or cleared as indicated in processing symbol **546.**

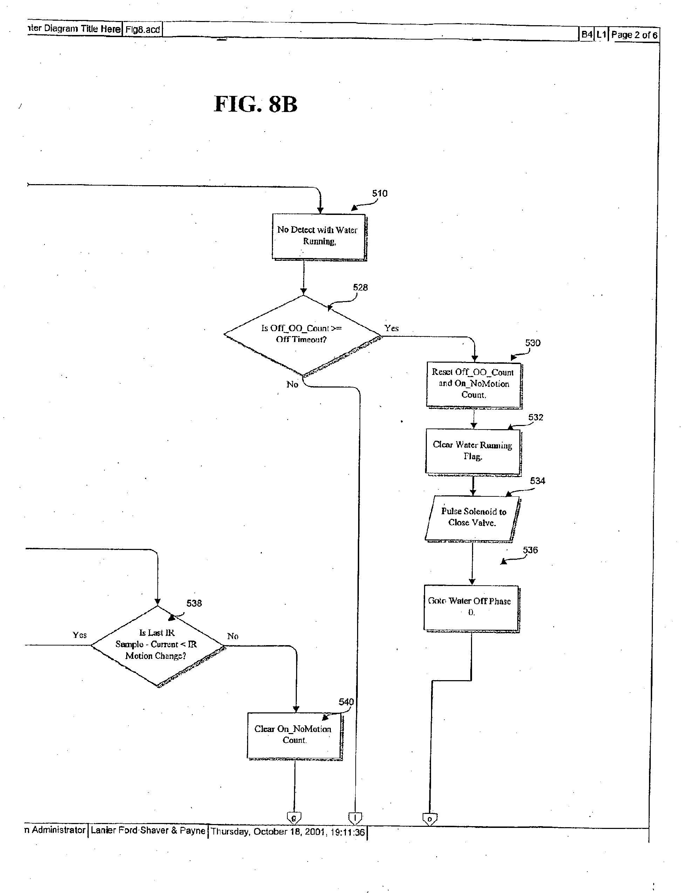

With reference to **FIG 8B**, if in decision symbol 526 the query indicates that the current sample does not exceed the previous sample, then the current IR sample is subtracted from the last IR sample as indicated by the decision symbol **538.** If the difference is less than a predetermined value that indicates a motion detection threshold, then a flag is incremented as indicated in processing symbol **548** (**FIG**. **8A**) that indicates that no motion was detected. If the difference is not less that the predetermined value, then the flag indicating no motion detected is cleared as indicated in processing symbol **540 (****FIG. 8B****).**

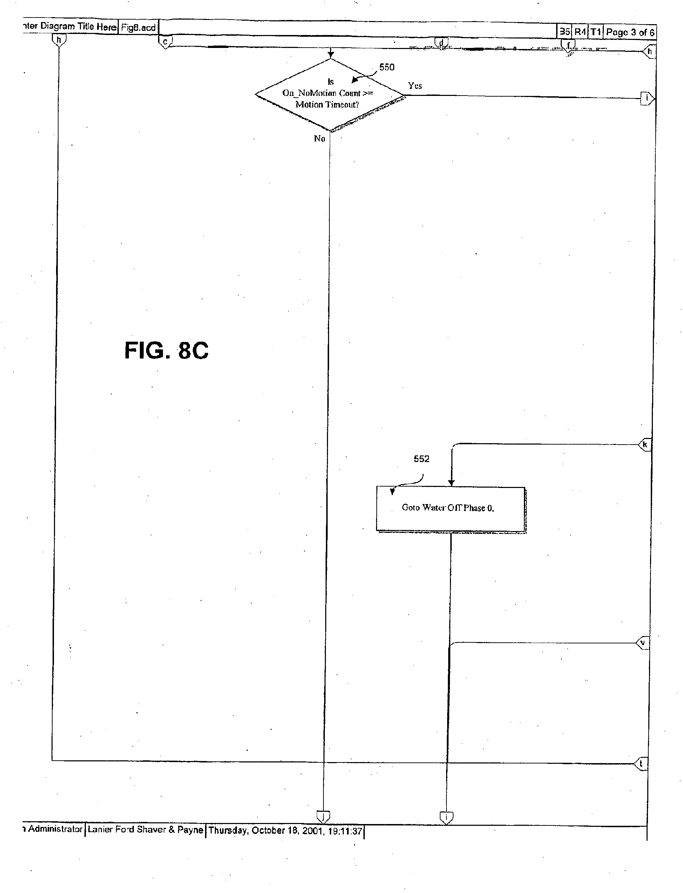

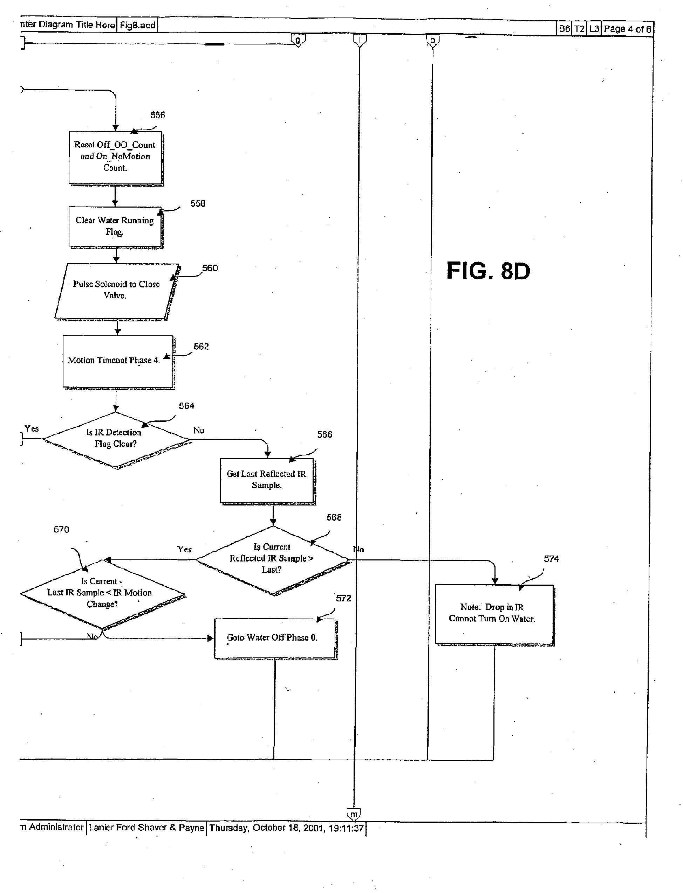

With reference to **FIG. 8C**, decision symbol **550** indicates that, if the flag indicating that no motion is detected exceed the motion timeout value, then the Motion Detection Thread **500** returns as indicated by the terminating symbol **554** in **FIG. 8C****.** In other words, no motion is detected, and it has exceeded timeout, then the Motion Detection Thread **500** terminates until the water is activated again. With respect to **FIG. 8D****,** if the timeout duration has not been surpassed, then the Motion Detection Thread **500** proceeds by resetting the flag indicating no motion and the counter in processing symbol **556.** The Water Running indicator is cleared in processing symbol **558**, and a separate process as indicated by the process call **560** is initiated that pulses the solenoid to close the valve.

Phase four begins at processing symbol **562.** If the IR Detection Flag is clear (no detection of a user's hands) by the query indicated in decision symbol **564,** then the, thread returns to the water off phase zero (0) as indicated in processing symbol **552** (**FIG. 8C**).

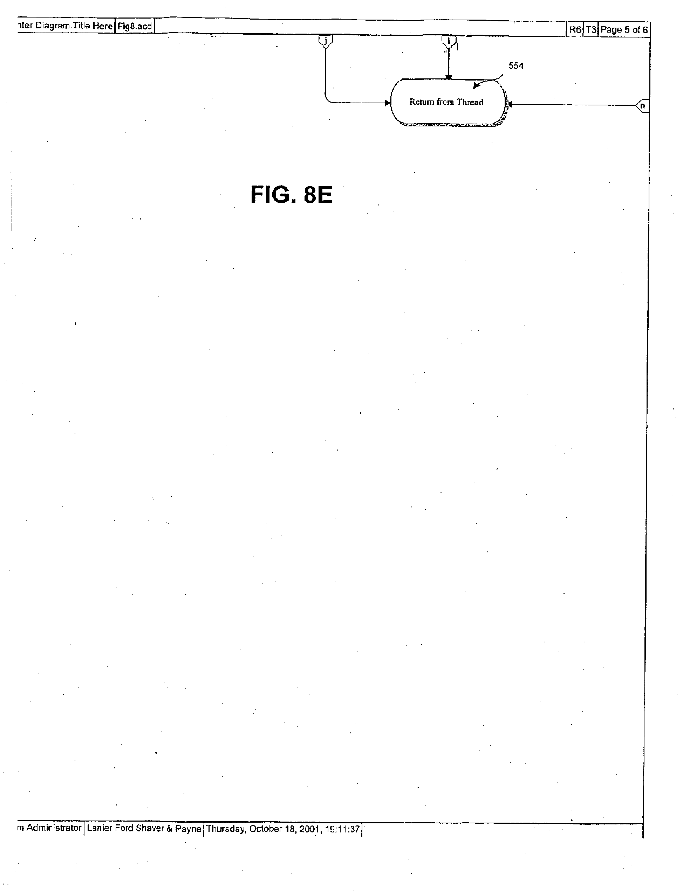

With reference to **FIG. 8D**, if a user's hands were detected in the decision symbol **564**, then the previous reflected IR sample is retrieved in processing symbol **566**. The current reflected IR sample is compared to the previous reflected IR sample in decision symbol **568**. If the current sample is greater than the previous sample in decision symbol **568**, then the difference in the current IR sample and the previous IR sample is examined to determine if it exceeds the IR motion change threshold in decision symbol **570**. If it does not meet or exceed the threshold, then the thread returns in the terminator symbol **554** (**FIG. 8E**). In other words, a drop in IR will not turn on the water. If it does indicate a motion change in decision symbol **570**, then water off phase zero (0) is initiated in processing symbol **572**.

If at the decision symbol **506** in **FIG. 8A**, it is determined that the IR Detection Flag is not set, then there has been no motion detected and the fluid is currently being dispensed from the device. With respect to **FIG. 8B****,** if the duration of the fluid dispensing has exceeded a timeout threshold from the query in decision symbol **528,** then the No Motion Detection flag is incremented in processing symbol **530** and the Water Running flag is cleared in processing step **532.** The solenoid is then pulsed to close the valve in the predefined process as indicated in **534,** and the Water Off phase is set to zero (0) in process symbol **536.**

Thread control is then returned to the overall firmware structure **202** as illustrated in **FIG. 5**. **In** **FIG. 5C****,** decision symbol **258** indicates that the firmware determines if there are any pending events. If there are pending events then the main thread timer is queried to determine if a cycle has expired. If the cycle time has expired, the cycle begins again at processing step **240** (**FIG**. **5B**) where the microcontroller is deactivated until the next cycle is initiated on the 250 millisecond interval.

If the cycle time has not expired, then the optical sensor looks for the Attention signal initiated by the handheld computer in processing symbol **262.** The Attention signal is emitted by the handheld computer as indicated in the Send Status function **178** in processing step **182** (**FIG. 4**). If the handheld computer has requested connected mode of the fluid dispensing device and the Attention signal is a valid signal, then the decision symbol **264** indicates that a transmit status response is sent to the handheld computer in the subsequent predefined process step **266.** Once the Status Response is transmitted, then the handheld computer and the fluid dispensing device enter connected mode as indicated in predefined processing symbol **268.** The firmware remains in connected mode until a command is transmitted or a timeout occurs in processing symbol **268.** If an End command is communicated by the handheld computer or a timeout occurs, the variables for the thread events are reset and the DIP switches are queried as indicated in processing symbol **270.**

The TBM interrupts are re-enabled in processing symbol **272** allowing the pulse cycle to continue, then the operation of the IR electronics are examined as indicated in the decision symbol **274.** If the IR electronics have been unplugged then the system is configured to do reflection calibration in one (1) second in processing step **276**. In decision symbol **278,** the IR electronics are then tested to determine if the devices are unplugged, if there is a battery warning, or if there exist any other errors. If each of the queries returns a negative response, then this error data is saved in processing symbol **282**.

The error indications are saved into a report for user accessibility in processing symbol **284.** The decision symbol **288** queries the error bits to determine if the errors changed from the last iteration of the firmware structure **202.** If the error has changed, then the previous error is saved in processing symbol **290**. With reference to **FIG. SD,** the TBM interrupts are re-enabled in processing symbol **292,** and error messages are transmitted to the handheld computer in predefined process symbol **294.**

The decision symbol **296** indicates a query of the IR electronics. If the electronics are working properly, then the pulse cycle is reinitiated in **FIG. 5B** at processing symbol **240.**

If the electronics are not working properly, then the system is placed into low power IR electronics unplugged Mode in predefined processing symbol **300.** The system remains in low power mode as indicated by the decision symbol **302** until the electronics are reactivated. Once the IR electronics begin working properly, processing step **308** indicates that the preparation is taken for the recycling of the IR and Battery Sampling. Thread control is reset in processing symbol **310.** If the calibration flag is set, then the TBM Interrupt Service Routine is initiated in processing symbol **314.** If Factory calibration is required as determined in decision step **316,** then the predefined Factory Calibration Thread is run as indicated by the predefined Factory Calibration symbol **318.** The system then holds until reset in process symbol **320** at which time the Firmware structure begins anew at decision symbol **208** in **FIG. 5A****.**

If Factory Calibration is not indicated in the decision symbol **316**, then the predefined Dynamic Calibration is run as indicated in the predefined processing symbol **322**. To reinitiate the threads, the TBM interrupts are reset in processing symbol **324**, and a pulse cycle begins at processing symbol **240** where the microcontroller is deactivated until a cycle is initiated by the TBM.

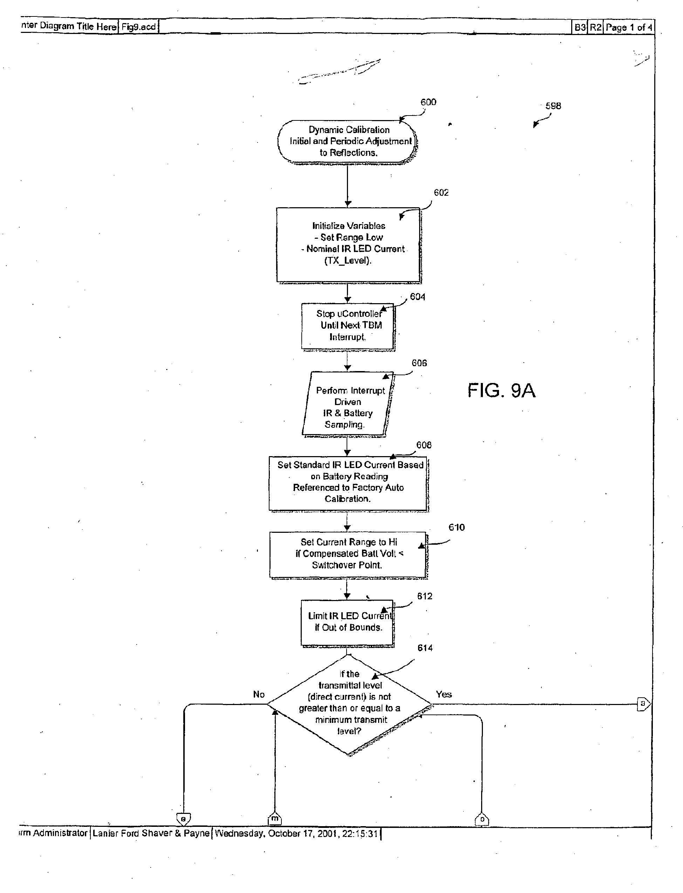

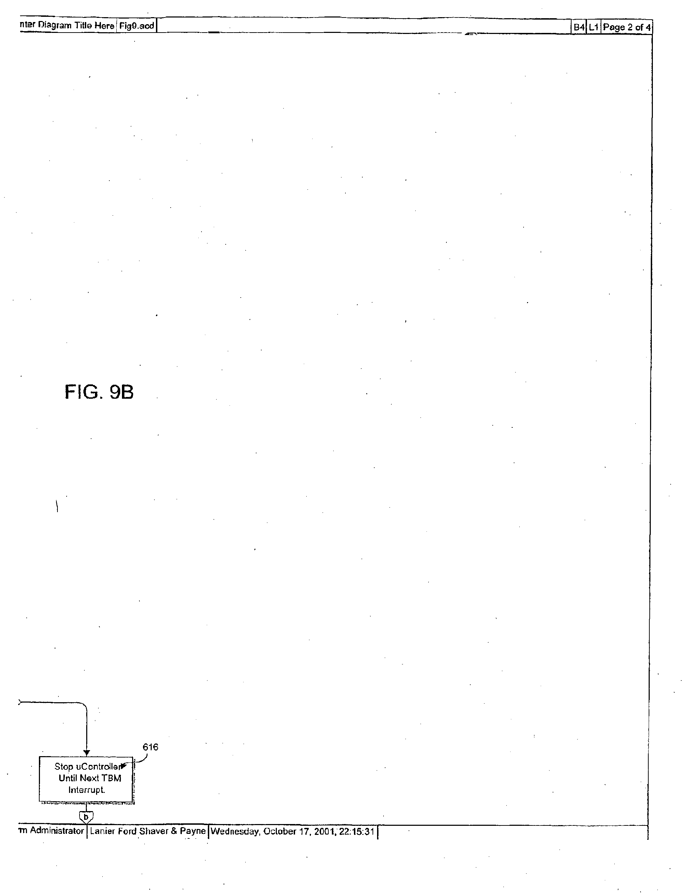

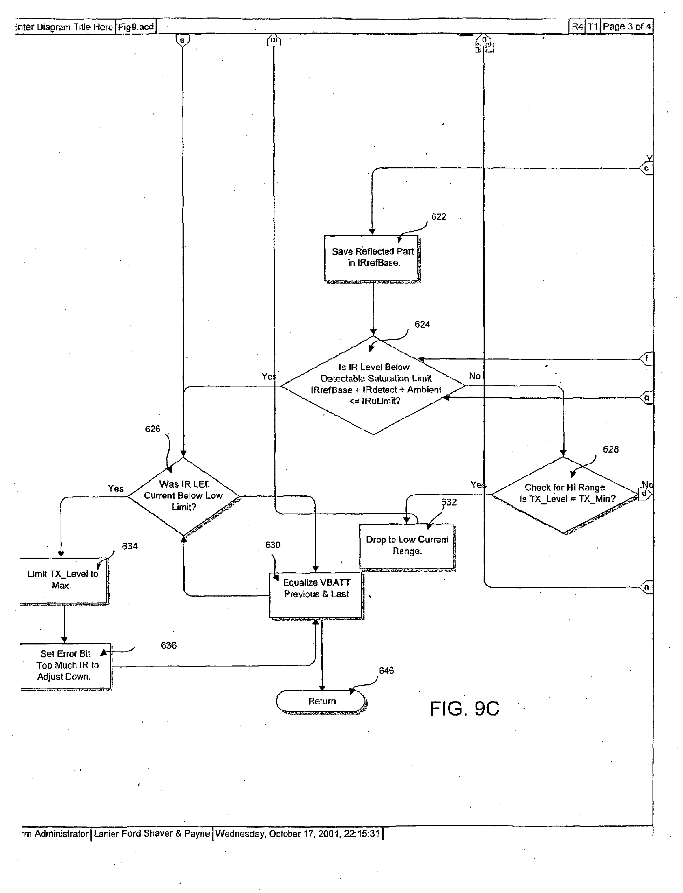

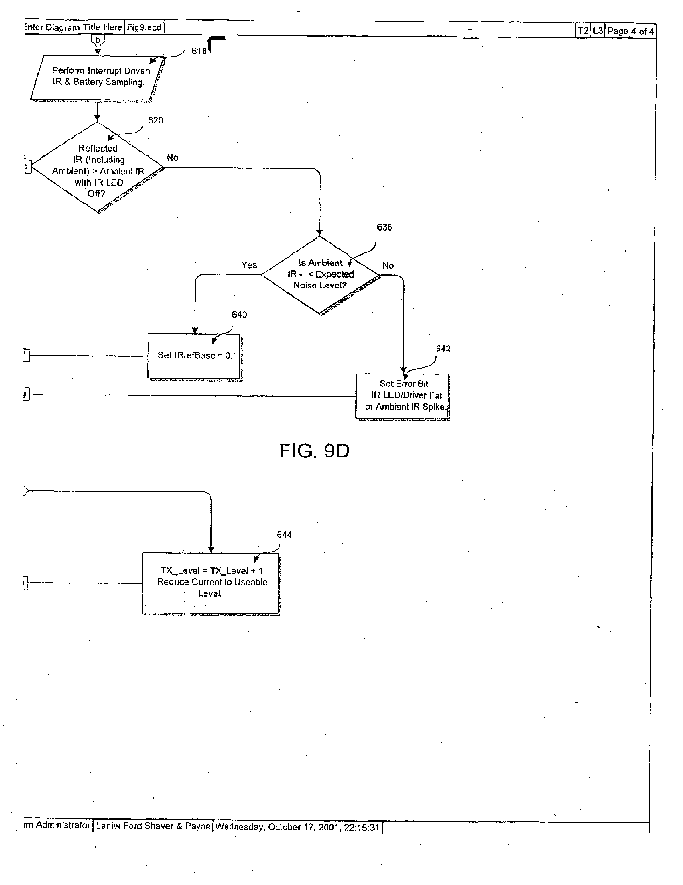

If Factory Calibration is not indicated, then the Dynamic Calibration Thread **598** as illustrated in **FIG. 9** is run from the firmware overview structure **202** at processing symbol **322.** The Dynamic Calibration Thread **598** is executed both initially when the firmware is first powered up and periodically to adjust the IR hardware components as required by environment and system changes.

The Dynamic Calibration Thread **598** starts at the input symbol **600** in **FIG. 9A****.** The calibration begins by initializing required variables, setting the initial emitter selection to low, and setting the IR LED current to a nominal value (the transmit level) as indicated in processing symbol **602**. The microcontroller is deactivated for the duration of a regular 250 milliseconds TBM cycle in processing step **604**. The Interrupt Driven IR and Battery Sampling Routine **326** (**FIG. 6**) is called in order to obtain initial samples of the battery voltage as indicated in processing step **330 (****FIG. 6A****),** the reflected IR as indicated in processing step **356 (****FIG. 6B****),** and the ambient IR as indicated in processing step **360** (**FIG. 6B**).

Processing symbol **608** indicates that the Dynamic Calibration Thread 598 sets the current input to the IR LED based on the battery voltage sample obtained from the IR and Battery Sampling Routine **326** (**FIG. 6**). The current range is set to high if the compensated battery voltage is less than the switchover point in processing symbol **610,** and processing symbol **612** adjusts the IR LED current if it exceeds an operational limit that affects performance.

Decision symbol **614** begins the actual calibration of the IR LED and the optical sensor. If the transmit level (or initially the nominal IR LED current) is less than a minimum transmit value in order for the IR emitter to reach an effective range, then the microcontroller is deactivated until the next TBM cycle in processing symbol 616 in **FIG. 9B****,** and the Interrupt Driven IR and Battery Sampling Routine **326** (**FIG**. **6**) is run in processing symbol **618** in **FIG. 9D****.**

With reference to **FIG 9D****,** in the decision symbol **620,** the reflected IR including the ambient sample is compared to the ambient level when the IR LED has not emitted a pulse. This is in contrast to the initial setting that simply used reference values according to the standard LED based on the battery voltage reading.

With reference to **FIG. 9C**, if the sum of the reflected IR and the ambient level is greater than the ambient level when the IR LED has not emitter a pulse, then the reflected IR is the Reference Base Value as indicated in processing symbol **622**. If the IR level, which is defined as the sum of the Reference Base, the Reflected IR, and the Ambient IR, is below a detectable saturation limit in decision symbol **624**, then the current input to the IR LED is examined in decision symbol **626**.

If the current input to the IR LED is below the low limit, then the transmit level is set to a maximum value in processing step **634**, and an error bit is set that indicates that the emitter cannot be adjusted down any farther in processing symbol **636.** The battery voltage is then equalized in processing symbol **630** in order to prevent battery error, and the Dynamic Calibration Thread returns as indicated by the terminator symbol **646,** with errors. If the current input to the IR LED is not below the low limit, then the battery voltage is then equalized in processing symbol **630** in order to prevent battery error, and the thread returns as indicated by the terminator symbol **646,** without errors.

If the sum of the reflected IR and the ambient level is not greater than the ambient level when the IR LED has not emitted a pulse in decision symbol **620** (**FIG. 9D**), then the difference between the Ambient IR and the Reflected IR (including the Ambient IR) is examined in decision symbol **638** in **FIG. 9D****.** If the difference is less than the expected noise level, then the Reference Base is set to zero (0). If the difference is not less than the expected noise level, then an error bit is set in processing symbol **642,** and the IR level is examined in decision symbol **624**. If it is below a detectable limit, then the process provides an error before exiting if the IR LED current was below a low limit. If it was not below a low limit, it simply exits.

### COMMUNICATION PROTOCOL

Data communication between the optical interface ports of the handheld computer **104** (**FIG. 1**) and the fluid dispensing device **106** (**FIG. 1**) is now described. Communication between the devices is implemented as Broadcast Mode or Connected Mode.

### Broadcast Mode

The Broadcast mode is employed when the receiving control logic of a preferred embodiment discovers errors including, but not limited to, a malfunctioning solenoid, a low battery, or a reflected signal that is out of range at calibration. When such an error is detected during the normal operations of the firmware of the fluid dispensing device, a signal is emitted from an IR emitter **118** (**FIG**. **1**) of the fluid dispensing device.

The signal emitted has the following format:
ERRSSSSSSSE(CS)(LF).

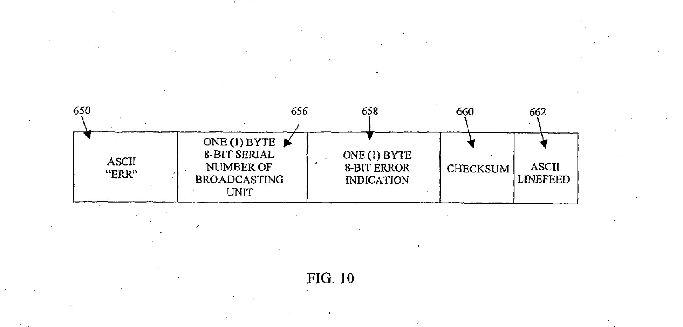

The emission is sent once per second. The specification of the signal is illustrated in **FIG. 10****.** The first three bytes indicate that the signal is a Broadcast signal including an ASCII "ERR" **650.** The next byte **656** includes an 8-bit serial number identifying the unit that has detected an error. Byte **658** indicates the type of error that has been detected. The following table describes the types of errors and the corresponding byte indicators:

**TABLE 1**

| BIT | ERROR TYPE |
|---|---|
| Bit 0 | Solenoid Open Circuit or Unplugged |
| Bit 2 | Solenoid load too heavy |
| Bit 3 | Ambient IR level out of Range |
| Bit 4 | Reflected IR out of range at Calibration |
| Bit 5 | Low Battery Warning |
| Bit 6 | Collar Unplugged |

The checksum byte **660** is a modulo 256 checksum inverted, and the last byte is an ASCII linefeed **662** to indicate termination of the signal.

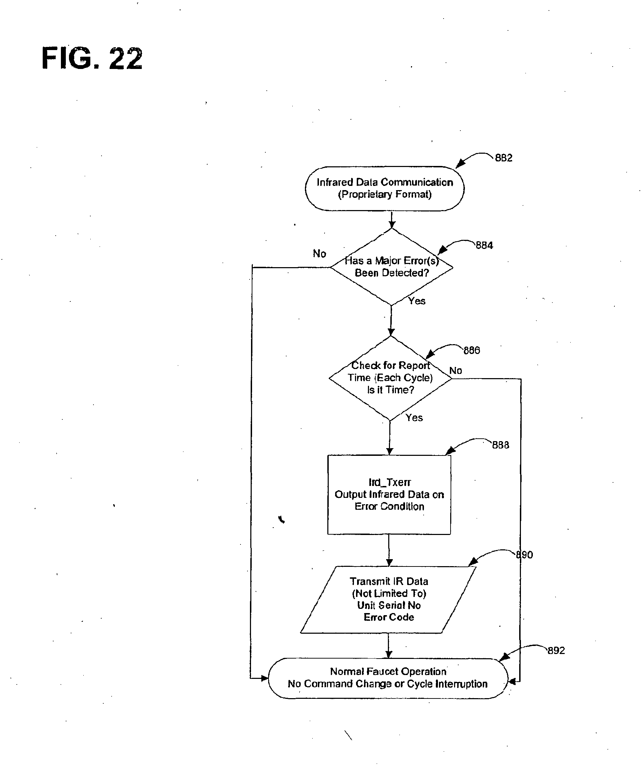

The control logic of the handheld computer processes a discovered error(s) and communicates the error(s) to the handheld computer. The Broadcast Communication Process is shown in **FIG. 22** and is designated generally throughout with reference numeral **882**.

Decision symbol **884** determines if an error has been detected within the fluid-dispensing device. Within the system, a timer is set, for example to broadcast error messages every five (5) pulse cycles. Therefore, in decision symbol **886** it is determined whether it is time to send out a Broadcast Signal. If it is not, then the fluid dispensing device continues with normal operation in terminating symbol **892.**

If it is time to transmit a Broadcast Signal, then the error data is sent in processing symbol **888.**

The handheld computer executes a scanning function that can be initiated by a user. **FIG. 3** represents the communication function of the handheld computer. The optical interface port is initialized **148,** and the I:R-State variable is set indicating that the port is open in **150.** The gCommand variable of the switch symbol **152** indicates that a user has selected the scan functionality. The scan function searches for a Broadcast signal of the type described.

Once detected, the signal is parsed and the information is stored on the handheld computer. This information is then readily available to the user for maintenance purposes.

### Connected Mode

The Connected Mode is initiated by the handheld computer when a user selects a functionality that requires data to be sent to the fluid dispensing device. As described, infra, an Attention Signal is emitted from the optical interface port of the handheld computer.

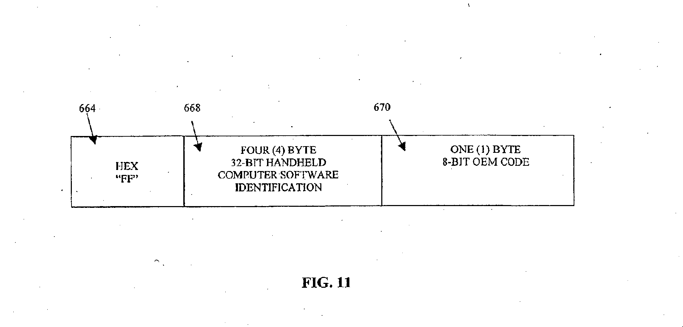

The Attention Signal specification is illustrated in **FIG. 11****.** The Attention Signal is defined as a hexadecimal "FF" **664.** The "FF" is followed by a four (4) byte computer software identification ASCII code **668.** The four-byte code **668** includes 4 ASCII characters identifying the company and product. The last byte **670** indicates an Original Equipment Manufacturing (OEM) code.

The "FF" **664** is sent continuously for 300 milliseconds (approximately 50 milliseconds longer than a normal fluid dispensing device pulse cycle). This allows the fluid dispensing device the opportunity to detect the Attention Signal if the Attention Signal is initially sent during a 250 millisecond cycle.

The fluid dispensing device responds within 39 milliseconds (14 milliseconds if the water is off). If there is no response from the fluid dispensing device, then the Attention Signal is sent repeatedly at a predetermined interval until a response is detected by the handheld device.

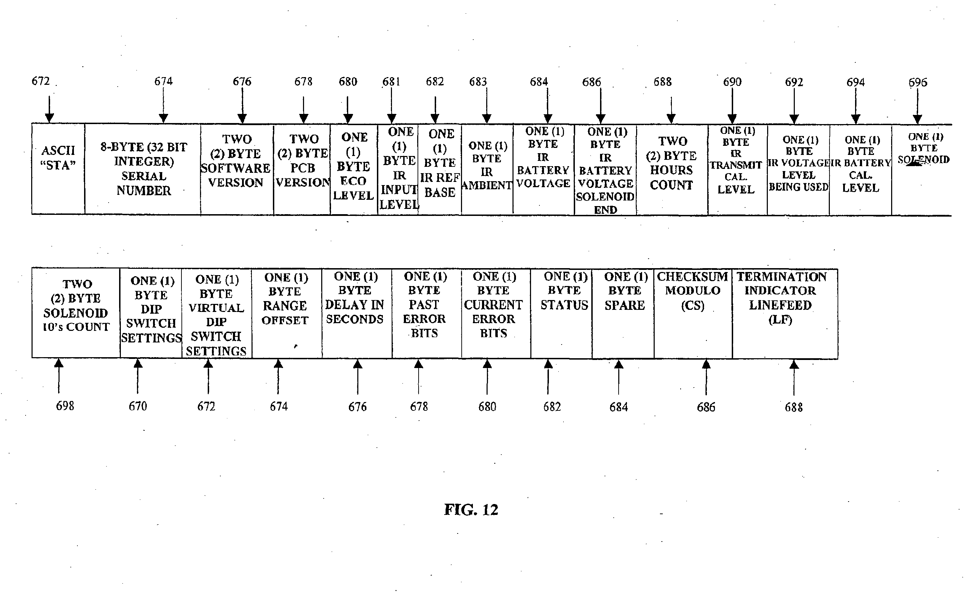

The Attention Signal response sent by the fluid dispensing device includes status information that is described with reference to **FIG. 12**. The initial ASCII "STA" byte **672** indicates that the fluid dispensing device is responding to the Attention Signal. The 8-byte serial number **674** indicates the serial number of the device responding to the Attention Signal. This 8-byte word is displayed on thy handheld computer as a hexadecimal number. The 2-byte software version **676** indicates to the handheld device the version of the firmware used on the fluid dispensing device. The next 2-byte PCB version **678** indicates the board revision number and the part number of the board. The one-byte Engineering Change Order ("ECO") level indicates previous maintenance order. The one-byte IR input level **681** identifies the IR sensitivity. The one-byte IR reference base reading provides an eight-bit reading. The one-byte IR ambient reading **683** is provided. The one-byte IR battery voltages **684** and **686** provide a normal operating battery voltage and a battery voltage at the end of a solenoid pulse, respectively. The following two bytes provide an hour count **688** for time purposes. The IR transmit calibration level byte **690** provides a voltage output value of the emitter, and the next byte provides a one-byte voltage level **692** of the voltage being used. The next byte is the battery calibration level **694** indicating a voltage reading of the battery at calibration. A one-byte solenoid count **696** and a two-byte solenoid 10's count **698** follow. The dip switch settings are indicated in the next byte **670**. The following table describes the bit numbers with corresponding definitions:

**TABLE 2**

| BIT | DESCRIPTION |
|---|---|
| B7 | DIP Switch 5 (water saver) |
| B6 | DIP Switch 1 (Range 1) |
| B5 | DIP Switch 2 (Range 2) |
| B4 | DIP Switch 3 (Scrub Mode, 60 second off delay) |
| B3 | DIP Switch 4 (Meter Mode) |
| B2 | Unused extra input jumper |
| B1 | Not used |
| B0 | Not used |

The virtual DIP switch settings are provided in byte **672** and are defined the same as the manual DIP switch settings except B0 is defined as "Use All Virtual Settings." Range offset **674**, delay in seconds **676**, past error bits **678**, and current error bits **680** provide additional information describing the current fluid dispensing device parameters. Status of the fluid dispensing device is given in the next byte **682** and the bits are defined as follows:

**TABLE 3**

| BIT | DEFINITION |
|---|---|
| B4 | PROGRAMMING ERROR, NUMBER OF BYTES SPECIFIED |
| B2 | PROGRAMMING ERROR, ADDRESS SPECIFIED |
| B1 | FLASH PROGRAM OPERATION NOT VERIFIED |
| B0 | LAST COMMAND CHECKSUM FAILED |

A one-byte spare is provided **684,** and the transmission is terminated with a checksum **686,** and a linefeed **688.**

Once connected mode is established, the handheld computer has several functions. The handheld computer can send a status request, send a set command, or send a program command.

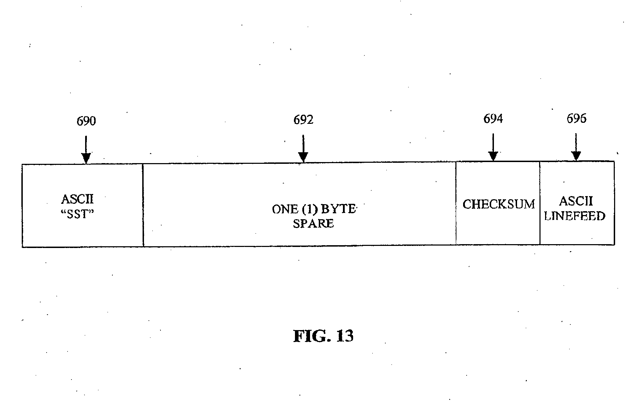

A status request from the handheld computer is responded to by the fluid dispensing device indicating that information that is sent when Connected Mode is accomplished. The status request flowchart in **FIG. 4** illustrates the software flow on the handheld computer when a Status command is requested. Processing symbol **184** indicates the transmission of a Status command, and the specification for the Status command is illustrated in **FIG. 13****.** A status command begins with and ASCII "SST" **690.** A one-byte spare **692** is followed by a checksum **694** and an ASCII linefeed **696** for tennination.

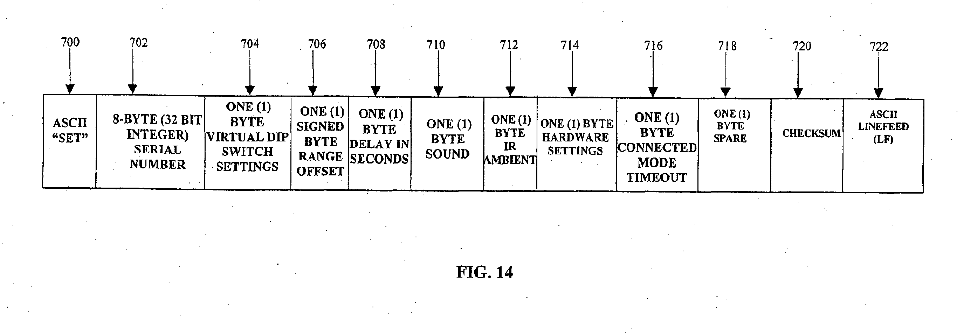

A Set command allows a user of the handheld device to reprogram various electronics of the fluid dispensing device, including but not limited to the DIP switches (i.e. virtual DIP switch settings), range offset, delay in seconds, sound, hardware settings, and connected mode timeout. **FIG. 14** illustrates a string transmitted by the handheld computer to accomplish a Set command. The ASCII "SET" string **700** is sent in the least significant byte. Following the "SET" string is an eight-byte serial number **702** indicating the handheld computer that is initiating the "SET" command. The one-byte virtual DIP switch settings **704** are described by the following table:

**TABLE 4**

| BIT | DESCRIPTION |
|---|---|
| B7 | DIP Switch 5 (water saver) |
| B6 | DIP Switch 1 (Range 1) |
| B5 | DIP Switch 2 (Range 2) |
| B4 | DIP Switch 3 (Scrub Mode, 60 second off delay) |
| B3 | DIP Switch 4 (Meter Mode) |
| B2 | Unused extra input jumper |
| B1 | Not used |
| B0 | All Virtual Settings |

The emitter range offset is provided in the next byte **704**, and a delay is provided in the next byte **708**. The sound can be turned on/off with the sound byte **710**. B0 indicates sound off. Byte **712** provides the IR ambient level reading. The user can reset hardware settings in the following byte **714** including B0 that resets the main board and B1 that indicates a soft reset. Resetting the main board includes the fluid dispensing device waiting 10 seconds, exiting Connected Mode, then resetting all the variables. A Soft Reset includes waiting 10 seconds, exiting Connected Mode, retaining virtual settings, and re-calibration. The next byte **716** allows the Connected Mode timeout to be changed in the range of 0-255 seconds. Finally, a spare byte **718,** a checksum byte **720** and an ASCII linefeed **722** terminates the "SET" command.

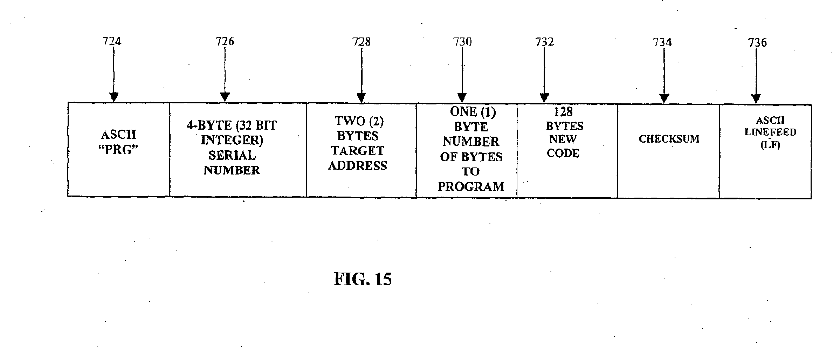

A Program Command allows a handheld computer user to reprogram the fluid dispensing device. The Program Command Specification is illustrated in **FIG. 15****.** ASCII "PRG" **724** initiates a Program Command. A four-byte serial number **726** follows indicating the identification of the handheld computer. The next two bytes 728 provide the target address of the fluid dispensing device. Typically, the target address includes the software type, the PCB code and the address returned from an "STA" Command. The number of bytes making up the new code is transmitted in one byte **730,** and the code itself is transmitted in the following 128 bytes **732.** If the code exceeds the 128 byte limit, then multiple "PRG" Commands can be sent from the handheld computer in order to transmit the entire piece of code. A checksum **734** and an ASCII linefeed **736** terminate the signal.

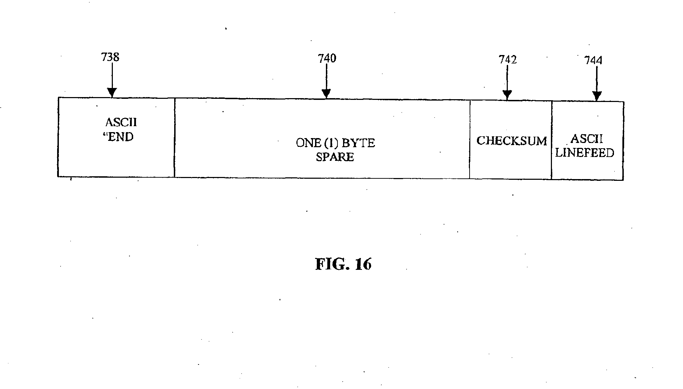

The handheld computer sends an End Command as illustrated in **FIG. 16** in order to terminate the Connected Mode between the handheld computer and the fluid dispensing device. An ASCII "END" string **738** initiates the End Command. It is followed by a one-byte spare **740** and a checksum **742.** The End Command is terminated by an ASCII linefeed **744.**

### GRAPHICAL USER INTERFACE OF HANDHELD COMPUTER

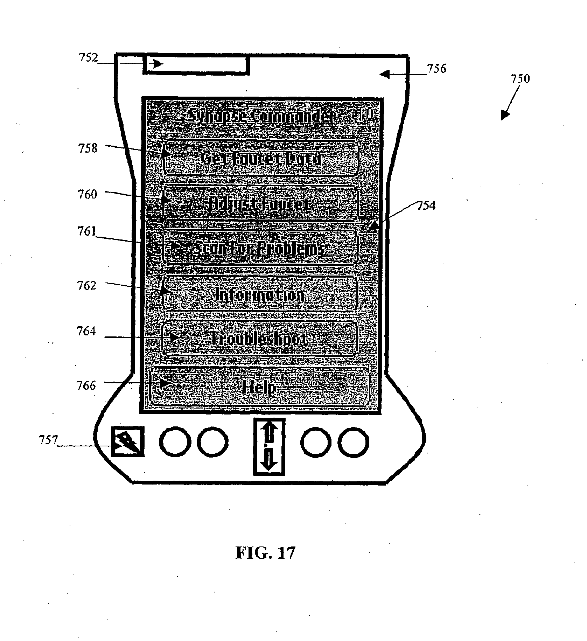

The Graphical User Interface (GUI) of the handheld computer is now described with reference to **FIG. 17****.** The handheld computer **750** generally includes a casing **756** having a monitor **754**, an optical interface port **752,** and a power button **756**. The monitor can be a touch-screen or any other type of monitor known in the art.

The system provides the user with several options including 1) "Get Faucet Data" **758**, 2) "Adjust Faucet" **760**, 3) "Scan for Problems" **761**, 4) "Information" **762**, 5) "Troubleshoot" **764**, and 6) "Help" **766**. Of the six (6) options provided, options 1) through 3) require communication with the fluid dispensing device.

The "Get Faucet Data" option **758** retrieves and stores fluid dispensing device information. Retrieval of the fluid dispensing device data is accomplished by executing the SST command of the handheld computer. As described, the handheld computer emits an Attention Signal. When the fluid dispensing device detects the Attention Signal the handheld computer and the fluid dispensing device enter Connected Mode. The fluid dispensing device then transmits a set of information describing various parameters of the fluid dispensing device.

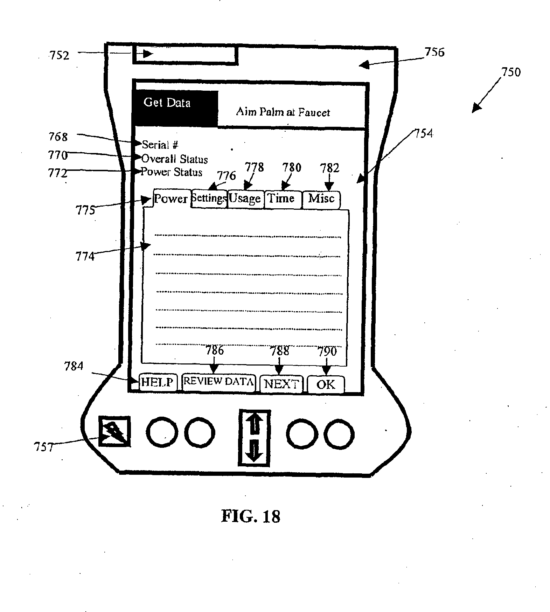

Once the data is retrieved, the data is stored in the handheld computer for user accessibility. **FIG. 18** illustrates the GUI interface that is displayed once the data is received from the fluid dispensing device. The fluid dispensing device data can be reviewed by pressing the five tabs on the screen including Power **775**, Settings **776**, Usage **778**, Time **780**, and Miscellaneous **782**.

The Power tab **775** contains data relating to the power operating parameters of the fluid dispensing device. These parameters include normal operating voltage, loaded voltage, time in use and battery replacement date.

The Settings tab **776** contains data on the various system settings accessible to the user. These settings include, but are not limited to, operating mode, range setting, range offset, delay setting and virtual settings. The factory default operating mode is the normal motion detecting mode where water flows within 250 milliseconds after activating sensor and stays on as long as motion is detected. The maximum on time in this mode is 45 seconds. Additional modes include scrub mode where water continues to flow for sixty (60) seconds after deactivation of the sensor, metered mode having a 10-second flow time from first hand detection, and water saver mode having a 5-second maximum on time starting from first hand detection and fast turnoff when hands are removed.

The Usage tab **778** provides information such as the number of uses, uses per day and uses per month. The Time tab includes the time of the scan, the date of the scan and the total on-time for the faucet. Finally, the Miscellaneous tab **782** includes current errors, past errors, software version, PCB number and engineering change level.

Additional pushbuttons Help **784**, Review Data **786**, Next **788**, and OK **790** provide additional functionality. Review Data **186**, when selected, displays data from the fluid dispensing device. Next **780**, when selected, performs another "Get Faucet Data" function on a fluid dispensing device.

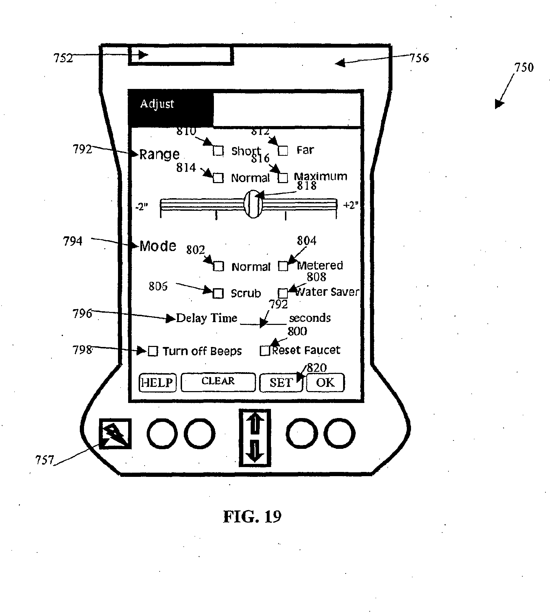

The "Adjust Faucet" option **760** (**FIG. 17**) allows a user to edit the parameters of the fluid dispensing device and download parameter changes to the device, itself. Selecting the "Adjust Faucet" option **760** from the Commander menu in **FIG. 17** displays the GUI illustrated in **FIG. 19****.** This GUI is a form having numerous areas in which the user can enter information about the parameters of the fluid dispensing device. The user can modify the "Range" **792** of the emitter by selecting one of the checkboxes "Short" **810,** "Normal" **814, "Far" 812** or "Maximum" **816.**

The user can also modify the "Mode" **794** in which the fluid dispensing device is operating. The user can place the device in "Normal" mode **802,** "Scrub" mode **806,** "Metered" mode **804** or "Water Saver" mode **808** by selecting the corresponding checkbox.

The range slider **818** allows the user to add or subtract 2 inches from the optics range. Initially, the user must calibrate the faucet to determine the current range length. The slider can then be used to adjust the current range ±2 inches.

In addition, the user can change the "Delay Time" **796** of the operating mode selected. The user can enter a delay time ranging from zero to 180 seconds by entering the time in the text field **792.** Also, the user can elect to "Turn off Beeps" by selecting the checkbox **798** or "Reset Faucet" by selecting the checkbox **800**.

Once edits have been completed, the user selects the "SET" pushbutton **820**. As described, infra, with reference to **FIG. 14****,** the Set Command is initiated by transmitting the "SET" signal after obtaining Connected Mode. The "SET" stream is sent to the fluid dispensing device, and the requested changes to the device parameters are updated.

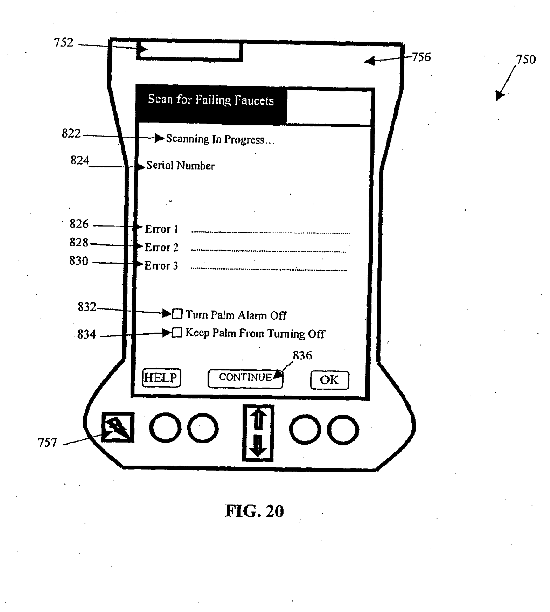

The "Scan For Problems" option **761** (**FIG. 17**) allows a user to scan a set of fluid dispensing device, searching for a signal from a device that has entered Broadcast Mode. This allows the handheld device to determine from the Broadcast Mode signal devices that are currently in need of service. Selecting the "Scan For Problems" option **761** from the Commander menu in **FIG. 17** displays the GUI illustrated in **FIG. 20**. As indicated, when the GUI illustrated in **FIG. 20** is displayed, the "Scanning in Progress" message **822** is displayed.

If a fluid dispensing device is in Broadcast Mode, the "Serial Number" **824** of the malfunctioning device is displayed. In addition, errors associated with the device "Error 1" **826**, "Error 2" **828** and "Error 3" **830** are displayed. The user can prevent the handheld device from sounding an alarm by selecting the "Turn Palm Alarm Off" checkbox **832**. Also, the user can select to keep the handheld computer on for as long as active scanning is in progress by selecting the "Keep Palm From Turning Off' checkbox **834**.

The user may continue scanning by selecting the "Continue" pushbutton **836**.

### EXEMPLARY SYSTEM HARDWARE

While numerous hardware configurations, in addition to those described briefly above, may be employed in accordance with the system and method of the present invention, reference will now be made in detail to a second preferred hardware configuration and arrangement applicable for use within the system of the present invention.

Because the features of the present invention can be shown with block and other diagrams, conventional electronic elements well known to those skilled in the art, such as transistors, amplifiers, resistors, capacitors, programmable processors, logic arrays, memories and corresponding couplings and connections of such elements are not shown. A person skilled in the art could readily understand the block diagrams illustrating embodiments of the present invention. The block diagrams show specific details that are pertinent to the present invention and do not obscure the disclosure with details that would readily be apparent to those skilled in the art.

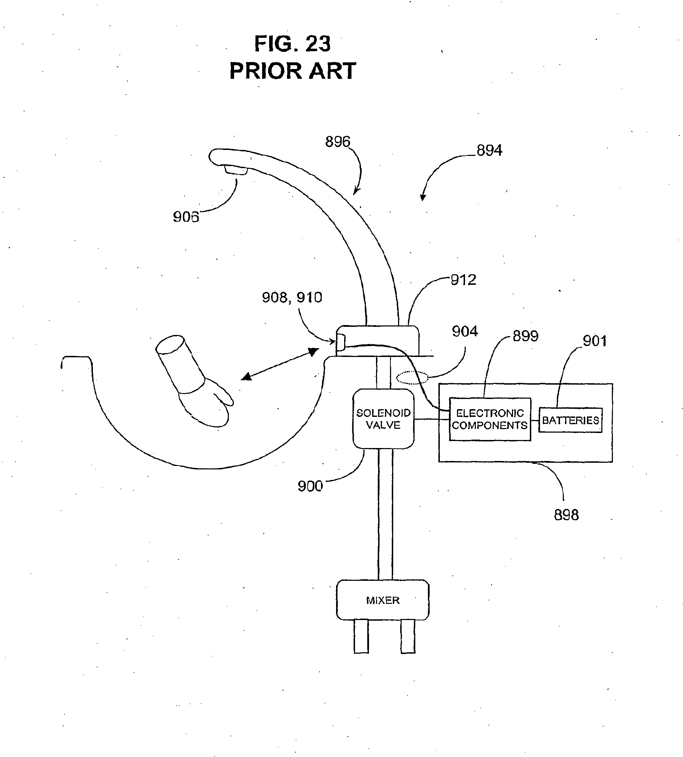

A conventional electronically operated flow control device **94** commonly found in the art is shown in **Fig. 23****.** The prior art embodiment depicted in **Fig. 23** generally includes a faucet **896**, an electronics box **898** for housing electronic components **899** and batteries **901**. The electronic components **899** are coupled to a solenoid valve **900,** which may move between an open position and a closed position in response to instructions provided by the electronic box **898.** Generally speaking, a wiring harness **904** having cables provides power and a communication link between electronics box **898*,*** faucet **896** and solenoid valve **900**.

As further shown in **Fig. 23**, faucet **896** of conventional electronically operated flow control device **894** typically includes an IR emitter **908** and an IR receiver **910** mounted within a collar **912** (or neck) of faucet **896**. The IR emitter **908** and the IR receiver **910** cooperate to transmit and receive IR signals, which indicate the presence of a user's hands or other objects in the vicinity of an aerator **906** When a signal emitted from IR emitter **908** is reflected back and received by IR receiver **910,** IR receiver **910** generates an electrical signal, referred to as a "reflection signal," that has a voltage corresponding to the signal strength of the reflected IR signal. The reflection signal is coupled through a wire in the wiring harness **904** to electronics box **898.** The electronic components **899** process the reflection signal and send a control signal through wiring harness **904** to the solenoid valve **900.** When an external object, such as a user's hands, moves into the detection range of IR emitter **908** and receiver **910,** the signal strength of the reflected signal and, therefore, the voltage of the reflection signal should be higher than normal. Thus, the electronic components **899** detect the presence of the external object. When the magnitude of the reflection signal is above a particular threshold value a control signal causes the solenoid valve to open, allowing water to flow in faucet **896**. In most conventional flow control devices **894** water flows until a timer expires or until the reflection signal is again below the threshold value indicating that the external object is no longer within the detection range of IR emitter **908** and IR receiver **910.**

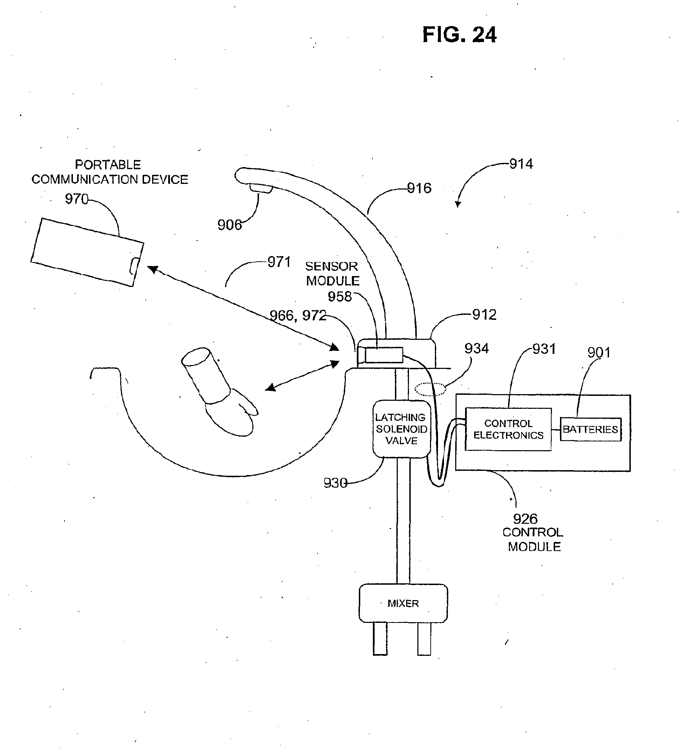

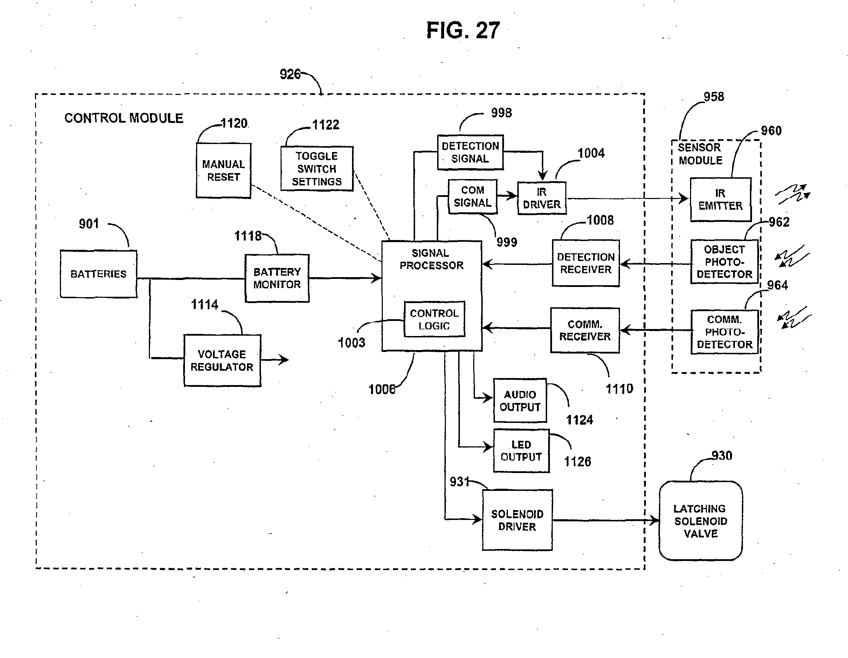

An exemplary embodiment of a remotely managed electronically operated dispensing apparatus of the present invention is shown in **Fig. 24****,** and is designated generally throughout by reference numeral **914.** Remotely managed electronically operated dispensing apparatus **914** preferably includes a dispensing unit, such as a faucet **916.** Faucet **916** preferably includes a collar **912** having an emitter aperture **972** preferably covered by a signal transmissive lens, and a receiver aperture **966,** which permit signals, such as, but not limited to, IR signals to exit and enter collar **912**. Remotely managed automatic dispensing apparatus **914** further includes a control module **926,** a latching solenoid valve **930** that opens and closes in response to signals provided by control module **926.** In the preferred embodiment, control module **926** is contained in an enclosure that incorporates an anti-vandalism bracket (not shown). Remotely managed automatic dispensing apparatus **914** may also include one or more flexible sheaths (not shown) for protecting and positioning the electrical cables **934,** which provide a communication link between a sensor module **958 (****Fig. 27****)** positioned within collar **912** of faucet **916** and control module **926,** and between control module **926** and latching solenoid valve **930.**

The primary purposes of the flexible sheathes are to protect the electrical wiring and to position the electrical wiring with respect to control module **926** and latching solenoid valve **930** such that flexible sheathes form one or more drip loops which are designed to capture any water inadvertently running down the electrical wiring from a leak in faucet **916,** the sink, or otherwise. A primary objective of the drip loops is to prevent water from entering the cables and reaching the electronics within the control module **926** and/or the latching solenoid valve **930.** Gravitational forces act on any water collected in the drip loops thereby preventing that water from contacting the connectors or other electronic circuitry within or adjacent to control module **926** and latching solenoid valve **930**.

Remotely managed automatic dispensing apparatus **914** also preferably includes a sensor board or sensor module **958 (****Fig. 27****)** that is particularly well suited for being retrofit within collar **912**. The sensor module **958** may be designed similar to or identical to conventional sensor modules employed within conventional flow control devices **894**. More specifically, the sensor module **958** may be constructed and arranged so that it may be installed in a collar having only two apertures, which is typical for conventional flow control devices **894.**

As will be described in greater detail below, remotely managed automatic dispensing apparatus **914** of the present invention is preferably designed to communicate with a portable communication device **970**. The portable communication device **970**, which in the preferred embodiment is a reprogrammed personal digital assistant (PDA), is preferably configured to transmit and receive IR signals for establishing a communication link **97** with managed automatic dispensing apparatus **914.**

In addition to an IR emitter **960** and an IR sensor **962,** such as a detection or object photo detector, sensor module **958** of the present invention preferably incorporates a data or communication IR sensor **964** such as another photo detector, for receiving communication signals from the portable communication device **970.** In one embodiment, IR sensor **962** and the communication IR sensor **964** are mounted back-to-back (not shown) on sensor module **958.** Generally speaking, photo detector lens **965** is positioned near the front of sensor board **958** for receiving light through receiver aperture **966,** while communication photo detector lens **968** faces the rear of IR sensor **962.** Transparent silicone sealant fill **967** may hold the sensors **962** and **964** securely in aligned position. Additional arrangements of IR sensors **962, 964** are possible in other embodiments. In particular it is not necessary communication IR sensor **964** to receive IR signals through the hole **973** of IR sensor **962.** For example, a side-by-side configuration for sensors **962** and **964** may be employed if desired. Further, in another embodiment a single sensor, such as IR sensor **962** may serve for detecting reflections and for receiving communication signals.

According to techniques that will be described in more detail below, control module **926,** sensor module **958** within collar **912,** and latching solenoid valve **930** may be utilized to control operation of faucet **916** and to provide information pertaining to the operational state of faucet **916.** Similarly, these components may be implemented within and utilized to control other fluid dispensing devices, such as toilets, for example.

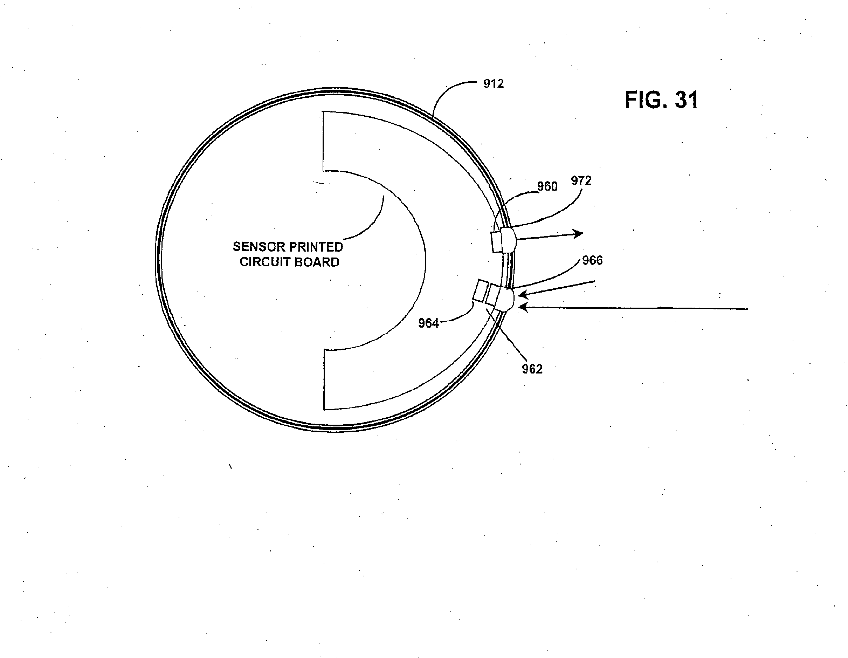

As depicted in **Figs. 24** and **31****,** sensor module **958** is preferably mounted such that IR emitter **960** is positioned behind and aligned with the transmit aperture **972** of collar **912,** while detection photo detector **962** and communication photo detector **964** are positioned behind and aligned with the receive aperture **966** of collar **912.** So arranged, the IR signals emitted by IR emitter **960** are transmitted through transmit aperture **972,** and both the reflected signal from IR emitter **960** and the communication signal emitted by a portable communication device **970** for controlling and managing the operation of automatic dispensing apparatus **914** are received through receive aperture **966.** When desired, automatic dispensing apparatus **914** may send information to portable communication device **970** (upstream information) through transmit aperture **972.** Further, automatic dispensing apparatus **914** may receive information from portable communication device **970** (downstream information) through receive aperture **966.** Typically, most IR devices, such as the IR emitter **960** and IR detectors **962, 964,** have an integrated lens to focus infrared signals and protect the semiconductor material.

As shown in **Fig. 24**, portable communication device **970,** such as a Palm IIIe™ manufactured by 3com®, which preferably utilizes the Palm Computing Platform®, for example, may be configured to communicate with the remotely managed automatic dispensing apparatus **914** of the present invention. Generally speaking, the portable communication device **970** used to communicate with the remotely managed automatic dispensing apparatus **914** of the present invention includes an IR emitter and IR sensor that provide for exchange of data via IR signals passed through apertures **966, 972.** It will be understood by those skilled in the art, however, that other devices and particularly portable devices, such as personal digital assistants manufactured by other manufacturers, cellular telephones, pagers, portable computers, and the like may be used to communicate with the remotely managed automatic dispensing apparatus **914** of the present invention. In addition, communication signals other than IR signals may be used to transfer data between any such portable communication device and the remotely managed automatic dispensing apparatus **914** of the present invention. It is not necessary that a device communicating with the remotely managed automatic dispensing apparatus **914** be a portable device configured for IR communication. For example, one or more wires may be coupled to the remotely managed dispensing apparatus **914** to serve as a communication channel for a non-portable communication device. This being said, the preferred embodiments of the present invention will be described hereafter with reference to the portable communication device **970** being the PalmIIIe™, but the preferred embodiments are in no way intended to be limited only to the above mentioned PDA.

Generally speaking, the present invention provides an improved maintenance and monitoring system for use in commercial facilities such as office buildings, manufacturing plants, warehouses, or the like. For example, public restrooms in an office building may benefit from such a system in that such a system may facilitate the efficient operation, management and servicing of multiple conventional automatic flow control devices throughout the building. More specifically, conventional automatic flow control devices are battery powered and therefore require battery replacement. In addition, there are typically a plurality of such devices in any given restroom within the building. As one would expect, the maintenance of such conventional dispensing devices is both time consuming and labor intensive since maintenance personnel have no efficient way of determining whether such devices require battery replacement or are otherwise defective. As a general rule, manual interaction with each device is required to make these determinations. For example, maintenance personnel position their hands beneath the aerator of each conventional automated sink to determine if the faucet is operating correctly. Troubleshooting, however, requires the time consuming steps of removing the cover of electronics box **898**, and physically checking and analyzing the circuitry and other components thereof. Accordingly, there is a need for an improved maintenance and monitoring system for commercial facilities having large numbers of automatic flow control devices.

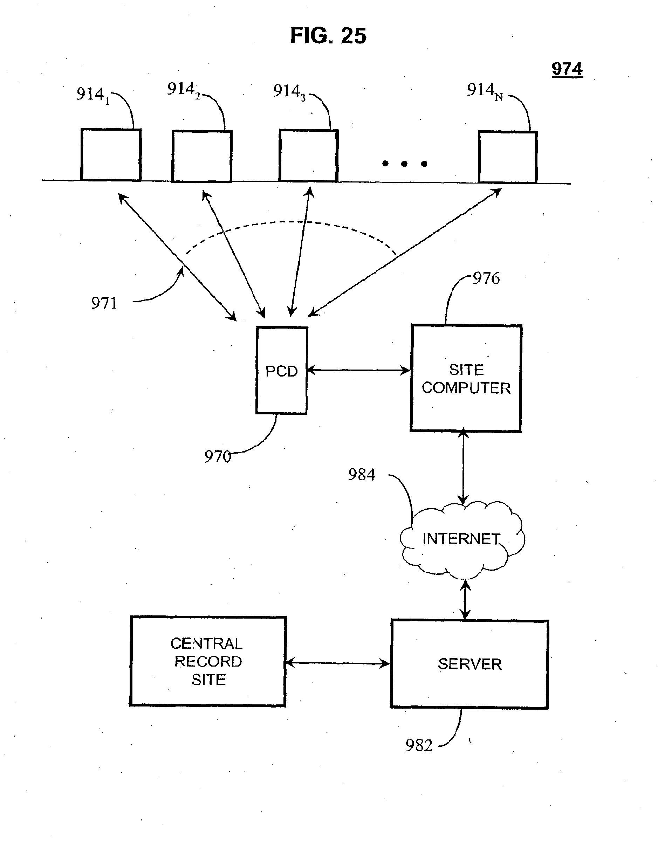

As depicted schematically in **Fig. 25****,** remotely managed automatic dispensing apparatus **914** may be a part of a remotely managed automatic dispensing system **974.** System **974** preferably includes a plurality of remotely managed automatic dispensing apparatuses **914₁**, **914₂**, ..., **914_{N}**, each having an associated dispensing unit, such as a faucet **916** or other dispensing device. The portable communication device **970** may exchange data with each of the automatic dispensing apparatuses via one or more IR communication links **971.** A site computer **976** capable of communicating with portable communication device **970** may store information about each of the site's managed automatic dispensing devices. Optionally, one of ordinary skill in the art will recognize that system **974** may be monitored and controlled in a network environment. In a preferred embodiment, a remote server **982** may receive data relating to system **974** from PCD **970** or a site computer **976** over the Internet **984** or other network environment via any standard network connection.

System **974** of the present invention largely obviates the need for manual troubleshooting or servicing of dispensing devices. By implementing the system **974** of **Fig. 25**, maintenance personnel may enter an area, for example a restroom, containing numerous remotely managed automatic dispensing apparatuses **914** of the present invention, communicate with one or more of the apparatuses **914,** and determine which, if any, of the apparatuses are defective or otherwise require servicing based on data communicated from the one or more apparatuses **914.** In accordance with the preferred system **974** of the present invention, a failing or malfunctioning apparatus **914** may automatically discover an operational problem and broadcast an IR data signal indicating the nature of the problem. This IR data signal may indicate, for example, the serial number, location, and problem, among other things for the defective apparatus **914** in the room. Depending upon the nature of the problem associated with one or more of the apparatuses **914,** portable communication device **970** may preferably provide the maintenance person with troubleshooting information indicative of the problem. Moreover, PCD **970** may also be used to repair defective apparatuses **914.** For example, when the problem associated with a defective apparatus **914** is software related, PCD **970** may be used to transmit a software update or otherwise reprogram defective apparatus **914** by transmitting software updates via IR.

In addition, portable communication device **970** preferably includes memory for storing information such as the maintenance history and/or software update history of each device, or an installation and user's guide that may be used by maintenance personnel to install and operate new apparatuses **914.** The memory may also be used to maintain records of data gathered or entered for each apparatus **914,** by serial number. More preferably, portable communication device **970** may be used to transmit, to one or more apparatuses **914,** commands for adjusting apparatus parameters such as IR range, and/or update the software of a given apparatus **914,** thus largely eliminating the need for maintenance personnel to open the electronics box **926** and physically access one or more of the apparatus boards. Such commands may be received by IR sensor **964** and processed by signal processor **1006 (****Fig. 27****)**.

Information collected by portable communication device **970** may also be transferred to a site computer **976** for updating device records in stored memory of the site computer. In addition, any information transmitted by any apparatus **914** to portable communication device **970** may be sent to a web server **982** via the Internet **984** where the information may be logged and stored in a relational database, such as Microsoft Access, for device fault analysis or other research. Additionally, web server **982** may generate and deliver responses to trouble reports received from portable communication device **970** and system updates to site computer **976** via the Internet **984.**

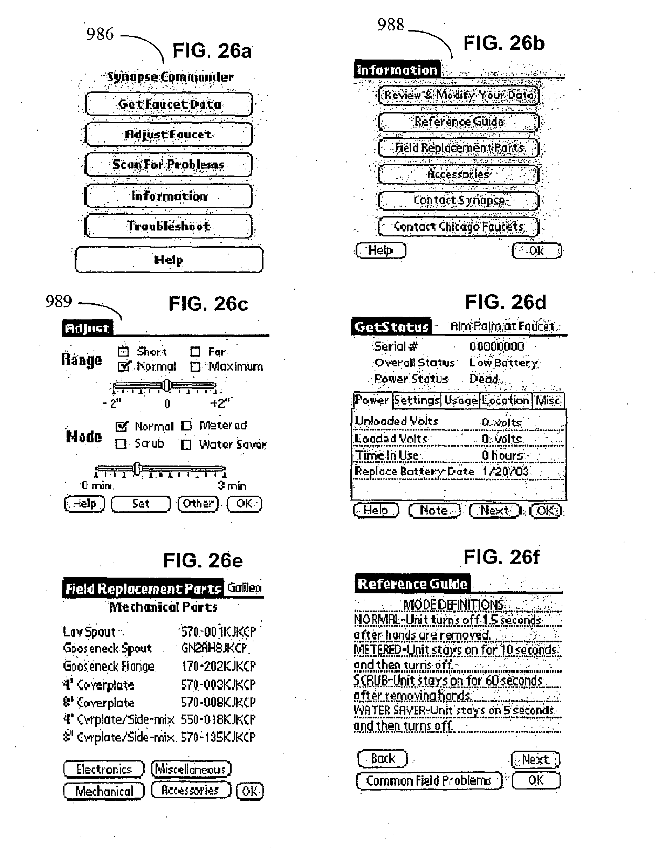

**Figs. 26a-26f** depict various display screens, as viewed on portable communication device **970**, that may be used in connection with system **974** of the present invention. For example, a control panel screen **986** displays, on portable communication device **970,** a menu of selectable items for the managed automatic dispensing apparatus **914.** By way of example, but not limitation, a user may select "Information" from screen **986** and obtain information about a faucet as viewed on Information screen **988**. Adjust screen **989** provides inputs for adjusting faucet parameters, such as detection distance, flow mode, and time on. Additional example screens are shown in **Figs. 26d-26f** and provide maintenance personnel with information that will reduce troubleshooting time and time to repair. The depicted screens represent preferred examples of the types and arrangements of information that may be available to maintenance personnel on display screens provided by PCD **970**.

The block diagram of **Fig. 27** illustrates a more detailed view of control module **926** and sensor module **958**. The control module includes control logic **1003** for controlling the operation of remotely managed dispensing apparatus **914**. The control logic may be implemented in hardware, software or a combination thereof. In the preferred embodiment, the control logic **1003** is implemented in software and stored within a signal processor, such as, for example, a Motorola microprocessor (MC88HC908GP32CF8) having flash memory, analog-to-digital (A/D) converters and a variety of input and outputs as are described in the vendor's data sheets. When the remotely managed dispensing apparatus **914** is implemented as a faucet that dispenses fluid into a sink, the electronics of the remotely managed dispensing apparatus **914** may preferably be located in sensor module **958** contained in the collar **912** of the faucet and in control module **926**, which is typically mounted under the sink. The two modules **926**, **958** may be electrically connected via cables **934** (**Fig. 24**). In addition, a cable extends from the control module **926** to a latching solenoid valve **930** that directly controls fluid flow. The control module **926** is preferably positioned in a secure enclosure while the sensing electronics or sensor module **958** is preferably positioned on a sensor board potted in collar **912** of the faucet. The potted arrangement reduces the likelihood that water will come into contact with the sensing electronics, and thus minimizes the risk of corrosion and other damage to these parts.

The signal processor **1006** provides a detection signal **998** and a communication signal **999** for transmission from an IR emitter **960** in the sensor module **958**. The detection signal **998**, preferably generated by the control logic **1003**, is a sequence of one or more narrow pulses. In the preferred embodiment, the pulses occur several times per second although other time intervals may be utilized in other embodiments. The detection signal is preferably sent to IR driver circuit **1004** and coupled via a cable to the IR emitter that wirelessly transmits the narrow IR pulses. In the preferred embodiment, one pulse is transmitted every 250 milliseconds. The detection signal is transmitted when the automatic dispensing apparatus is in a detection mode and the communication signal is transmitted when the automatic dispensing apparatus is in a communication mode. The managed automatic dispensing apparatus in the preferred embodiment transfers from the communication mode back to the detection mode when control logic **1003** determines that all information has been exchanged.

Reflected detection signals are detected by an object photo detector **962** and are thereafter coupled to the signal processor **1006** via a detection receiver **1008**. Other receiver elements such as a filter or amplifier, or both may be utilized to process the reflected signals detected by the object photo detector **962**. In the detection mode, the managed automatic dispensing apparatus transmits a detection signal, receives reflected detection signals, and remains in the detection mode until there is a request to transfer to a communication mode. The communication mode request may be initiated by the portable communication device **970** as disclosed above and further described in co-pending U.S. Patent Application filed October 23, 2001, entitled, "Data Communications System and Method for Communication Between Infrared Devices," and assigned Attorney 'docket No. 00-0895.16, which is hereby incorporated herein by reference, if desired, or may be initiated by the control logic **1003**. A request by the PCD **970** for switching to the communication mode preferably is initiated by a transmission of a known digital sequence from the PCD **970**. Once the known sequence is detected by the communication photo detector **964**, communicated to control logic **1003** via communication receiver **1110** and verified by control logic **1003**, the automatic dispensing apparatus **914** transitions to the communication mode. When the managed automatic dispensing apparatus **914** is in the communication mode, the control logic **1003** transmits a communication signal to the IR emitter **960**. The communication signal may require a boost from the IR driver circuit **1110** before being transmitted to the IR emitter **960**. The non limiting communication signal of the present invention may be based on the specifications described in an IR Data Association Specification and may be limited to half duplex transmission at or less than 9600 bps. Those skilled in the art could use a variety of modulation technologies to provide for information or data exchange.

When the object photo detector **962** generates a signal in response to reflected signals from an object, such as a person's hand, the signal is communicated to signal processor **1006**. If the signal is greater than a threshold value, receive logic in the signal processor provides an open valve signal to a solenoid driver **931**. Solenoid driver **931** and any associated electrical components can be similar or identical to an H-bridge circuit described in U.S. patent 5,819,336. The solenoid driver **931** is adapted to drive a latching solenoid valve 930 that opens in response to the open valve signal or closes in response to a close valve signal from the signal processor **1006**.

The control module **926** may be powered by one or more batteries **901** or by some other suitable power source. One embodiment of the present invention incorporates four (4) AA batteries in series (around 6 volts) coupled to a voltage regulator **1114** for providing a regulated voltage of three (3) volts for most of the electronics and uses six (6) volts to power the latching solenoid valve **930** and the IR emitter **960**. An audio output **1124** and LED output **1126** serve as troubleshooting indicators. For example, if the battery voltage is low, the LED preferably exhibits a defined on/off pattern. A battery monitor **1118** serves several functions. Under no-load conditions, the battery monitor **1118** determines, comparing the battery voltage with a known voltage, if the battery should be replaced. In addition, the battery monitor **1118** may determine if the windings in the latching solenoid valve **930** are in an open circuit condition or in a short circuit condition by observing the battery loading characteristics. Information from the battery monitor **1118** may be sent to the portable communication device **970** when the remotely managed dispensing apparatus **914** is in the communication mode. In addition, an audio signal from the audio output device 1124 or a visual output from the LED output **1126** may be used to notify maintenance technicians of a variety of identified problems.

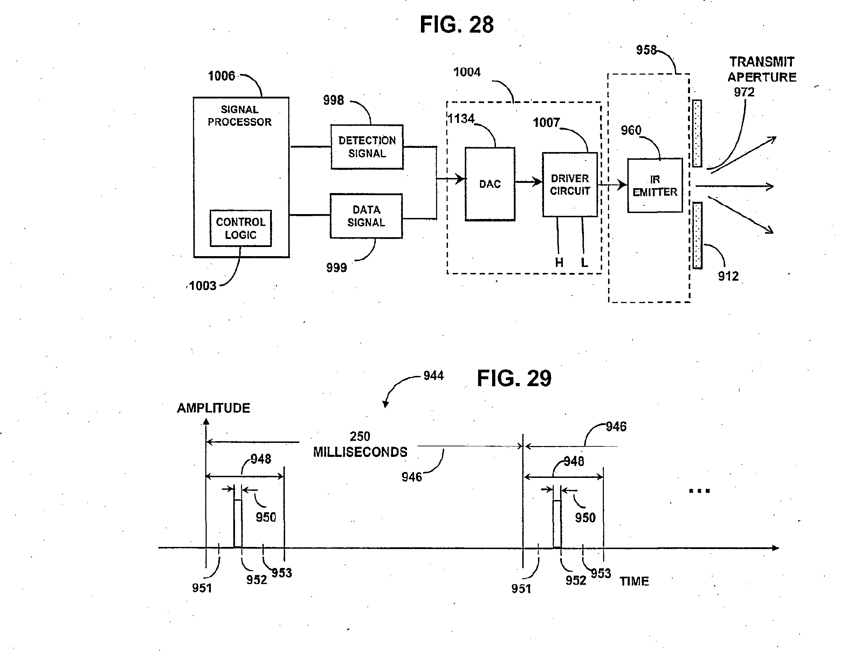

**Fig. 28** **is** a block diagram illustration of timing aspects of the automatic dispensing apparatus **914** of the present invention. The control logic **1003** preferably generates a detection signal **998** when the managed automatic dispensing apparatus **914** is in the detection mode and preferably generates a data communication signal **999**, for the upstream direction, when the managed automatic dispensing apparatus **914** is in the communication mode. The control logic **1003** processor is configured to generate either the detection signal **998** or the communication signal **999**, but the control logic **1003** preferably does not generate the signals simultaneously. The signal generated by the control logic **1003** is sent to a digital-to-analog converter (DAC) **1134** and is preferably conditioned by driver circuit **1007**. An output from the driver circuit **1006** is coupled over a communication link such as a wire to the IR emitter **960** in sensor module **958**. Preferably, a transmit aperture **972** in collar **912** of the dispensing device allows the infrared signal to exit from an emitter lens integrated in IR emitter **960**. Other arrangements of emitters, lenses, and apertures may provide other embodiments for transmission of infrared signals. The method of generation of the above-mentioned transmit signals is not a limitation of the present invention. In the preferred embodiment, both the pulse width and the pulse height of the detection signal and communication signal may be controlled. For example, the width of the signal preferably is controlled utilizing transistors, and the height of the signal is preferably controlled by a digital value sent to a DAC. The arrangement of the transistors and the DAC could be implemented by those skilled in the art.

**Fig. 29** is a timing diagram **944** showing an event repeat time **946**, which is preferably approximately 250 milliseconds in the preferred embodiment Within the repeat time, there is an activity time **948** of around 200 microseconds. During the activity time three samples are taken and stored within memory of the signal processor **1006**. In addition the control logic **1003** generates a detection signal **998**, positioned in time as shown in **Fig. 29**. Control logic **1003** samples the battery condition **951**, then samples a reflection signal **952**, and finally samples the ambient condition **953** (such as room lighting). The reflection sample **952** and ambient sample are taken from object photo detector **962**. The reflection sampling occurs immediately after or as the detection signal, represented by pulse width **950** (approximately 60 microseconds), is transmitted. The ambient sampling is used to determine the light levels when no reflections occur. Those skilled in the art would appreciate that variations of the sampling times is not a limitation on the present invention. In general, narrow pulses pull less energy from the battery providing for energy savings, but narrow pulses contain higher frequencies than wide pulses. Components that process the higher frequencies associated with the narrow pulses typically cost more and a cost/efficiency factor is a design consideration. When the repeat time is 250 milliseconds as shown in **Fig. 29**, the activity time occurs approximately four (4) times per second. Experience has shown that this frequency of activity satisfies the needs of a person using the automatic dispensing unit of the present invention. The use of the ambient sample and the reflection sample are inputs to an adjustment algorithm described in a co-pending U.S. Patent Application filed October 23, 2001, entitled, "System and Method for Automatic Dynamic Calibration for Infrared Sensing Device," and assigned Attorney Docket No. 00-0895.19. Although not specifically discussed in this specification, initial system calibration is described in detail in a co-pending U.S. Patent Application filed October 23, 2001, entitled, "Method of Automatic Standardized Calibration for Infrared Sensing Device," and assigned Attorney Docket No. 00-0895.17. In addition to the three samples described above, other samples may be taken to determine the condition of elements within the automatic dispensing apparatus **914** of the present invention. For example, samples taken when the latching solenoid valve **930** is activated may be used to determine changes in the required activation power. Changes in the activation power may give an indication of the solenoid's condition or could indicate above normal pressure in the water supply line. Neither the number of samples, type of samples, or order of samples is considered a limitation on the present invention.

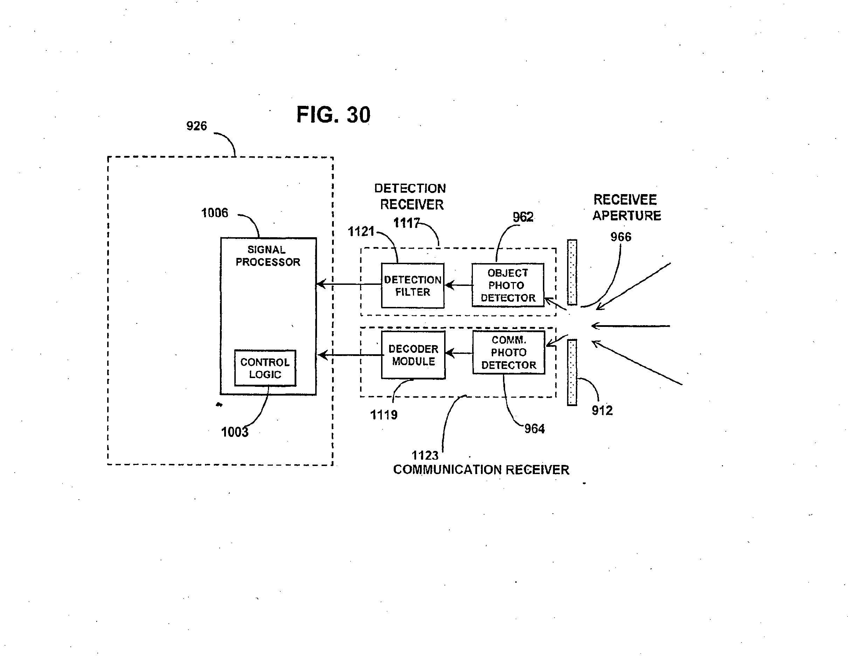

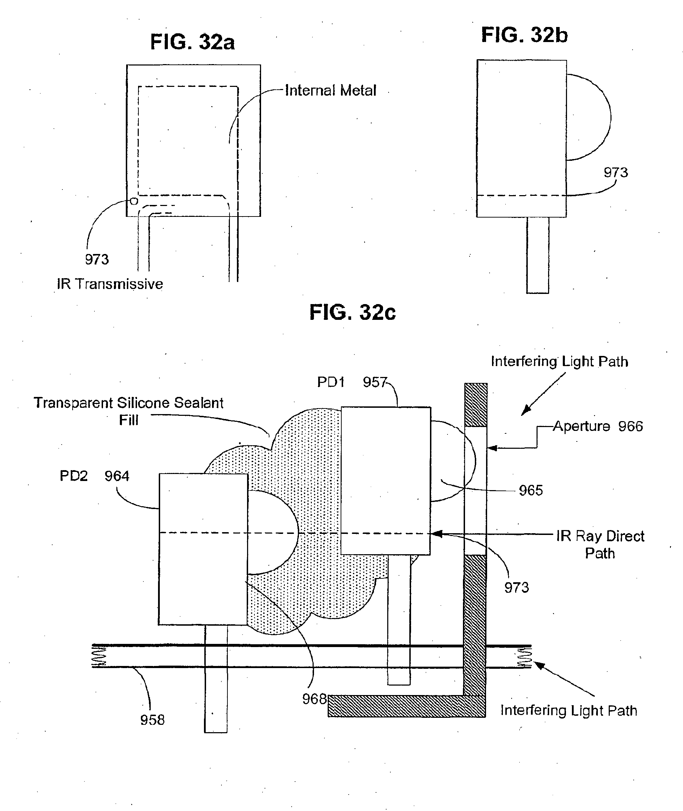

**Fig. 30** is a block diagram showing a preferred receiver arrangement in accordance with the preferred electronically operated dispensing apparatus of the present invention. As shown in the diagrammatic illustration a detection receiver **1117** and a communication receiver **1118** are shown side-by-side. The detection receiver **1117** includes object photo detector **962** coupled to a detection filter **1121**. The output of detection filter **1121** preferably is coupled to and processed by the control logic **1003**. The communication receiver **1123** includes the communication photo detector **964** coupled to a decoder module **1119**, the output of which is processed by the control logic **1003**. In one embodiment, the object photo detector **962** and the communication photo detector **964** may be arranged back-to-back (not shown). Various other embodiments, however, are also possible. For example, in another embodiment a single photo detector could provide signals to the detection filter and a decoder module. An arrangement of filters could also be used to separate the lower frequencies of the reflection signals from the higher frequencies of the communication signals. A more preferred embodiment will be described below with reference to **Figs. 32a-32c**. While only a single aperture is shown in **Fig. 30**, a communication lens and detection lens may be incorporated with photo detectors **962** and **964**. The arrangement and location of the aperture and lenses are not intended to limit the scope of the present invention.

**Fig. 31** illustrates an exemplary top view mounting arrangement for the IR emitter **960** and the two IR detectors or photo detectors **962, 964**. When the emitter and detectors are mounted on a sensor Printed Circuit Board (PCB) of the sensor module **958**, the PCB fits within the collar **912** of the automatic dispensing apparatus **914**. In addition to the emitter and detectors, other electronic components (not shown) may reside on the PCB. As one of skill in the art will readily recognize, one or more cables preferably couple the PCB to the control module **926**.

**Figs. 32a-32c** illustrate a preferred front-to-back arrangement for the two IR detectors or diodes **962, 964**. Object photo diode **962** is mounted at the front of the sensor printed circuit board and the communication photo diode **964** is mounted behind and preferably offset slightly from photo diode **962**. The diodes are preferably positioned some standoff distance from one another, and secured in the positions as shown, with transparent silicone sealant fill **967** as depicted in **Fig. 32c**. The object photo diode **962** preferably includes an IR transmissive aperture **973** that provides for IR signal coupling between an IR source, such as portable communication device **970**, and communication photo diode **964**. Generally speaking, the above mentioned arrangement allows IR signals to pass through aperture **973** to communication photo diode **964**, thus providing better IR reception of data signals than the back-to-back arrangement. Although other sensors may be employed in accordance with the present invention, the preferred object photo diode **962** may be a diode identified by part number BPV23F and the communication photo detector **964** may be a diode identified by part number BPV22F, both of which are manufactured by Vishay Intertechnology, Inc.. The photo diodes **962**, **964** are preferably mounted on the sensor printed circuit board with conventional electronic components. In addition, and as indicated in **Fig. 32c**, the arrangement positioned behind a single aperture has the effect of minimizing interference from undesired light sources, such as sunlight or room lighting.

Because the automatic dispensing apparatus **914** in the described embodiment is battery powered, it may be desirable to utilize a battery savings methodology. Such a battery saving methodology is embodied when the control logic **1003** configures the signal processor **1006** to operate in an on mode, a wait mode, and a stop mode. When the automatic dispensing apparatus **914** is installed and functioning, the signal processor is in the on mode approximately 2.8% of the time, the stop mode nearly 97% of the time, and the wait mode for around 0.2% of the time. A low frequency clock frequency of 32.768 KHz is preferably applied to the signal processor during the stop mode allowing the signal processor to operate on about 50 microamps. When a timer, functioning in the stop mode, reaches a given value, the signal processor transitions to the on mode. During the on mode the clock frequency for the signal processor is approximately 4 MHz, requiring an operational current of about 4 milliamps for the signal processor. The wait mode requires around 1 milliamp of current, and is used for special purposes, such as providing power for operation of the control logic for the latching solenoid drivers during a transition between the on mode and the stop mode. Where the detection signal is an emitter pulse that is preferably sent 4 times per second with a pulse width of around 59 microseconds, the power requirement for the emitter **960** of the automatic dispensing apparatus **914** is significantly reduced. Conventional dispensing devices send pulses around 8 times per second with a pulse width of over 200 microseconds. In addition, modifications to the latching solenoid valve circuits have provided an additional reduction in energy requirements.

The battery saving methodology described above allows an embodiment of the remotely managed automatic dispensing apparatus to operate on four (4) AA batteries, where each battery is capable of supplying around 2500 mAhours. Conventional dispensing devices typically require four (4) C batteries, where each battery is capable of supplying around 7100 mAhours. The reduction, of nearly 65%, in power requirements and the associated benefits of reduced cost and size represents a significant improvement over conventional dispensing devices.

In the preferred embodiment, the present invention normally operates in the detection mode, to provide the function of dispensing water. A method or procedure is provided in accordance with the present invention to transfer from the detection mode to the communication or data mode. Since the PDA communication protocol is preferably based on the IRDA specifications, it is preferable to send a known sequence to the sensor module **958** from the portable communication device **970** for at least 300 milliseconds since the operational mode for the control module **926** typically occurs for a brief amount of time every 250 milliseconds. When the control module detects the known sequence a detection mode to communication mode transition is initiated as described more detail above.

## Claims

1. A wireless data exchange system comprising:
an electronically operated fluid dispensing device (102) comprising: a transmitter (118), a receiver (116), and a control module configured to communicate with the transmitter (118) and the receiver (116), the control module being configured to provide a detection mode of operation in which the electronically operated fluid dispensing device (102) emits an infrared pulse signal from the transmitter (118) and is caused to dispense fluid when an object is within pulse range of the pulse signal and the receiver (116) detects the pulse signal reflected by the object and a communication mode of operation in which the detection mode of operation of the electronically operated fluid dispensing device (102) is interrupted and including control logic (122) configured to selectively change the mode of operation of the electronically operated fluid dispensing device (102), the transmitter (118) being configured to transmit signals identifying the electronically operated fluid dispensing device (102) and describing the operating status of the electronically operated fluid dispensing device (102), in the communication mode of operation; and
a communication device (100) adapted to be held in the hand of a user and configured to cooperate with the transmitter (118) and the receiver (116) to impart instructions wirelessly to the control logic (122) to change the mode of operation of the electronically operated fluid dispensing device (102) upon receipt of a command from a user,
wherein said communication device (100) includes a communication receiver and a microprocessor, and wherein the communication receiver and the microprocessor cooperate to receive the signals from said electronically operated fluid dispensing device (102), identify the electronically operated fluid dispensing device (102) and determine the operating status of the electronically operated fluid dispensing device (102),
wherein said communication device (100) further includes an emitter that communicates with the microprocessor to transmit infrared signals to the electronically operated fluid dispensing device (102) in response to the signals received from said electronically operated fluid dispensing device (102), the transmitted signals including instructions that change the operating parameters of said electronically operated fluid dispensing device (102).

2. The system of claim 1, wherein the receiver (116) comprises a first receiver and a second receiver, the first receiver being configured to operate in the sensing mode and the second receiver being configured to operate in the communication mode.

3. The system of claim 1, wherein the transmitter (118) comprises an active infrared emitter configured to selectively emit sensing signals capable of being received by the receiver and communication signals capable of being received by said communication device.

4. The system of claim 3, wherein the receiver (116) comprises an infrared detector capable of detecting a communication signal and a sensing signal.

5. A method of exchanging data wirelessly between a fluid dispensing device (102) and a communication device (100), said method comprising the steps of:
sending a wireless signal from a handheld communication device to an electronically operated fluid dispensing device (102) operating in a detection mode of operation in which the electronically operated fluid dispensing device (102) emits an infrared pulse signal and is caused to dispense fluid when an object is within pulse range of the pulse signal and the pulse signal reflected by the object is detected;
changing the mode of operation of the electronically operated fluid dispensing device (102) from the detection mode of operation to a communication mode of operation in which the detection mode of the electronically operated fluid dispensing device (102) is interrupted in response to said sending step; and
establishing a two-way wireless communication link for the exchange of data between the handheld device and the electronically operated fluid dispensing device (102) while the electronically operated fluid dispensing device (102) is in the communication mode of operation in which the detection mode of the electronically operated fluid dispensing device (102) is interrupted,
wherein said handheld communication device (100) includes a display screen, said method further comprising the steps of displaying the operating status of the electronically operated fluid dispensing device (102) on the display screen, and of transmitting an infrared signal from the handheld communication device (100) to the electronically operated fluid dispensing device (102) in response to the displaying step in order to change the operating parameters of the electronically operated fluid dispensing device (102).

## Patentansprüche

1. Ein drahtloses Datenaustauschsystem mit:
einer elektronisch betriebenen Fluidabgabeeinrichtung (102) mit: einem Sender (118), einem Empfänger (116) und einem Steuermodul, das konfiguriert ist, um mit dem Sender (118) und dem Empfänger (116) zu kommunizieren, wobei das Steuermodul konfiguriert ist, um einen Detektionsbetriebsmodus, in dem die elektronisch betriebene Fluidabgabeeinrichtung (102) ein infrarotes Pulssignal von dem Sender (118) emittiert und dazu gebracht wird, Fluid abzugeben, wenn sich ein Objekt innerhalb der Pulsreichweite des Pulssignals befindet und der Empfänger (116) das von dem Objekt reflektierte Pulssignal detektiert, und einen Kommunikationsbetriebsmodus bereitzustellen, in dem der Detektionsbetriebsmodus der elektronisch betriebenen Fluidabgabeeinrichtung (102) unterbrochen ist, und eine Steuerlogik (122) umfasst, die konfiguriert ist, um den Betriebsmodus der elektronisch betriebenen Fluidabgabeeinrichtung (102) selektiv zu ändern, wobei der Sender (118) konfiguriert ist, um Signale zu senden, die die elektronisch betriebene Fluidabgabeeinrichtung (102) identifizieren und den Betriebsstatus der elektronisch betriebenen Fluidabgabeeinrichtung (102) in dem Kommunikationsbetriebsmodus beschreiben; und
einer Kommunikationseinrichtung (100), die angepasst ist, um in der Hand eines Benutzers gehalten zu werden, und konfiguriert ist, um mit dem Sender (118) und dem Empfänger (116) zu kooperieren, um drahtlos Instruktionen an die Steuerlogik (122) mitzuteilen, um den Betriebsmodus der elektronisch betriebenen Fluidabgabeeinrichtung (102) infolge des Empfangs eines Befehls von einem Benutzer zu ändern,
wobei die Kommunikationseinrichtung (100) einen Kommunikationsempfänger und einen Mikroprozessor umfasst und wobei der Kommunikationsempfänger und der Mikroprozessor kooperieren, um die Signale von der elektronisch betriebenen Fluidabgabeeinrichtung (102) zu empfangen, die elektronisch betriebene Fluidabgabeeinrichtung (102) zu identifizieren und den Betriebsstatus der elektronisch betriebenen Fluidabgabeeinrichtung (102) zu bestimmen,
wobei die Kommunikationseinrichtung (100) weiterhin einen Emitter umfasst, der mit dem Mikroprozessor kommuniziert, um Infrarotsignale an die elektronisch betriebene Fluidabgabeeinrichtung (102) als Antwort auf die von der elektronisch betriebenen Fluidabgabeeinrichtung (102) empfangenen Signale zu senden, wobei die gesendeten Signale Instruktionen umfassen, die die Betriebsparameter der elektronisch betriebenen Fluidabgabeeinrichtung (102) ändern.

2. Das System nach Anspruch 1, wobei der Empfänger (116) einen ersten Empfänger und einen zweiten Empfänger aufweist, wobei der erste Empfänger konfiguriert ist, um in dem Erfassungsmodus zu arbeiten, und der zweite Empfänger konfiguriert ist, um in dem Kommunikationsmodus zu arbeiten.

3. Das System nach Anspruch 1, wobei der Sender (118) einen aktiven Infrarotemitter aufweist, der konfiguriert ist, um selektiv Erfassungssignale zu emittieren, die geeignet sind, um von dem Empfänger empfangen zu werden, und Kommunikationssignale, die geeignet sind, um von der Kommunikationseinrichtung empfangen zu werden.

4. Das System nach Anspruch 3, wobei der Empfänger (116) einen Infrarotdetektor aufweist, der geeignet ist, ein Kommunikationssignal und ein Erfassungssignal zu detektieren.

5. Ein Verfahren zum drahtlosen Austauschen von Daten zwischen einer Fluidabgabeeinrichtung (102) und einer Kommunikationseinrichtung (100), wobei das Verfahren die Schritte aufweist:
Senden eines drahtlosen Signals von einer handgehaltenen Kommunikationseinrichtung zu einer elektronisch betriebenen Fluidabgabeeinrichtung (102), die in einem Detektionsbetriebsmodus betrieben wird, in dem die elektronisch betriebene Fluidabgabeeinrichtung (102) ein infrarotes Pulssignal emittiert und dazu gebracht wird, Fluid abzugeben, wenn sich ein Objekt innerhalb einer Pulsreichweite des Pulssignals befindet und das von dem Objekt reflektierte Pulssignal detektiert wird;
Wechseln des Betriebsmodus der elektronisch betriebenen Fluidabgabeeinrichtung (102) von dem Detektionsbetriebsmodus zu einem Kommunikationsbetriebsmodus, in dem der Detektionsmodus der elektronisch betriebenen Fluidabgabeeinrichtung (102) als Antwort auf den Sendeschritt unterbrochen wird; und
Etablieren einer wechselseitigen drahtlosen Kommunikationsverbindung für den Austausch von Daten zwischen der handgehaltenen Einrichtung und der elektronisch betriebenen Fluidabgabeeinrichtung (102), während sich die elektronisch betriebene Fluidabgabeeinrichtung (102) in dem Kommunikationsbetriebsmodus befindet, in dem der Detektionsmodus der elektronisch betriebenen Fluidabgabeeinrichtung (102) unterbrochen ist, wobei die handgehaltene Kommunikationseinrichtung (100) einen Anzeigeschirm umfasst, wobei das Verfahren weiterhin die Schritte des Anzeigens des Betriebsmodus der elektronisch betriebenen Fluidabgabeeinrichtung (102) auf dem Anzeigeschirm und des Sendens eines infraroten Signals von der handgehaltenen Kommunikationseinrichtung (100) zu der elektronisch betriebenen Fluidabgabeeinrichtung (102) als Antwort auf den Anzeigeschritt aufweist, um die Betriebsparameter der elektronisch betriebenen Fluidabgabeeinrichtung (102) zu ändern.

## Revendications

1. Système d'échange de données sans fil comprenant:
un dispositif de distribution de fluide à commande électronique (102) comprenant: un émetteur (118), un récepteur (116), et un module de commande configuré de manière à communiquer avec l'émetteur (118) et le récepteur (116), le module de commande étant configuré de manière à fournir un mode de fonctionnement de détection dans lequel le dispositif de distribution de fluide à commande électronique (102) émet un signal d'impulsion infrarouge à partir de l'émetteur (118), et est amené à distribuer un fluide lorsqu'un objet est situé au sein d'une plage d'impulsion du signal d'impulsion, et le récepteur (116) détecte le signal d'impulsion réfléchi par l'objet, et un mode de fonctionnement de communication dans lequel le mode de fonctionnement de détection du dispositif de distribution de fluide à commande électronique (102) est interrompu, et incluant une logique de commande (122) configurée de manière à modifier de façon sélective le mode de fonctionnement du dispositif de distribution de fluide à commande électronique (102), l'émetteur (118) étant configuré de manière à transmettre des signaux identifiant le dispositif de distribution de fluide à commande électronique (102) et décrivant l'état de fonctionnement du dispositif de distribution de fluide à commande électronique (102), en mode de fonctionnement de communication; et
un dispositif de communication (100) apte à être tenu dans la main d'un utilisateur et configuré de manière à coopérer avec l'émetteur (118) et le récepteur (116) pour conférer des instructions par voie hertzienne, à la logique de commande (122), visant à modifier le mode de fonctionnement du dispositif de distribution de fluide à commande électronique (102) suite à la réception d'une commande en provenance d'un utilisateur;
dans lequel ledit dispositif de communication (100) inclut un récepteur de communication et un microprocesseur, et dans lequel le récepteur de communication et le microprocesseur coopèrent en vue de recevoir les signaux provenant dudit dispositif de distribution de fluide à commande électronique (102), d'identifier le dispositif de distribution de fluide à commande électronique (102) et de déterminer l'état de fonctionnement du dispositif de distribution de fluide à commande électronique (102);
dans lequel ledit dispositif de communication (100) inclut en outre un émetteur qui communique avec le microprocesseur en vue de transmettre des signaux infrarouges au dispositif de distribution de fluide à commande électronique (102), en réponse aux signaux reçus à partir dudit dispositif de distribution de fluide à commande électronique (102), les signaux transmis comprenant des instructions qui modifient les paramètres de fonctionnement dudit dispositif de distribution de fluide à commande électronique (102).

2. Système selon la revendication 1, dans lequel le récepteur (116) comprend un premier récepteur et un second récepteur, le premier récepteur étant configuré de manière à fonctionner dans le mode de détection, et le second récepteur étant configuré de manière à fonctionner dans le mode de communication.

3. Système selon la revendication 1, dans lequel l'émetteur (118) comporte un émetteur infrarouge actif configuré de manière à émettre de façon sélective des signaux de détection aptes à être reçus par le récepteur, et des signaux de communication aptes à être reçus par ledit dispositif de communication.

4. Système selon la revendication 3, dans lequel le récepteur (116) comporte un détecteur infrarouge apte à détecter un signal de communication et un signal de détection.

5. Procédé d'échange de données par voie hertzienne entre un dispositif de distribution de fluide (102) et un dispositif de communication (100), ledit procédé comprenant les étapes ci-dessous consistant à:
envoyer un signal hertzien, d'un dispositif de communication portatif à un dispositif de distribution de fluide à commande électronique (102) fonctionnant dans un mode de fonctionnement de détection, dans lequel le dispositif de distribution de fluide à commande électronique (102) émet un signal d'impulsion infrarouge et est amené à distribuer un fluide lorsqu'un objet est situé au sein de la plage d'impulsion du signal d'impulsion et lorsque le signal d'impulsion réfléchi par l'objet est détecté;
modifier le mode de fonctionnement du dispositif de distribution de fluide à commande électronique (102), du mode de fonctionnement de détection à un mode de fonctionnement de communication, dans lequel le mode de détection du dispositif de distribution de fluide à commande électronique (102) est interrompu en réponse à ladite étape d'envoi; et
établir une liaison de communication sans fil bidirectionnelle pour l'échange de données entre le dispositif portatif et le dispositif de distribution de fluide à commande électronique (102) tandis que le dispositif de distribution de fluide à commande électronique (102) est en mode de fonctionnement de communication, dans lequel le mode de détection du dispositif de distribution de fluide à commande électronique (102) est interrompu;
dans lequel ledit dispositif de communication portatif (100) inclut un écran d'affichage, ledit procédé comprenant en outre les étapes consistant à afficher l'état de fonctionnement du dispositif de distribution de fluide à commande électronique (102) sur l'écran d'affichage, et à transmettre un signal infrarouge, du dispositif de communication portatif (100) au dispositif de distribution de fluide à commande électronique (102), en réponse à l'étape d'affichage, en vue de modifier les paramètres de fonctionnement du dispositif de distribution de fluide à commande électronique (102).
